# FASCICULE DE BREVET EUROPEEN

(11) **EP 3 526 952 B1**
(45) Date de publication et mention de la délivrance du brevet: **16.09.2020**
(21) Numéro de dépôt: 17788160.4
(22) Date de dépôt: 10.10.2017
(51) Int. Cl.: H04L 29/08

(54) **RELAIS DANS UN SYSTÈME DE COMMUNICATION DE TYPE LPWAN**
RELAIS IN EINEM LPWAN-ART-KOMMUNIKATIONSSYSTEM
RELAY IN AN LPWAN-TYPE COMMUNICATION SYSTEM

(30) Priorité: 13.10.2016 FR 1659900
(43) Date de publication de la demande: 21.08.2019
(73) Titulaire: Sagemcom Energy & Telecom SAS, 92500 Rueil-Malmaison (FR)
(72) Inventeur: TEBOULLE, Henri, 92500 Rueil Malmaison (FR); LE GOURRIEREC, Marc, 92500 Rueil Malmaison (FR)
(74) Mandataire: Cabinet Le Guen Maillet
(86) Numéro de dépôt international: PCT/EP2017/075757
(87) Numéro de publication internationale: WO 2018/069284

(56) Documents cités:
- "A Study of LoRa: Long Range & Low Power Networks for the Internet of Things", SENSORS, vol. 16, no. 9, 9 septembre 2016 (2016-09-09), XP055365265, CH ISSN: 1424-8220, DOI: 10.3390/s16091466
- USMAN RAZA ET AL: "Low Power Wide Area Networks: A Survey", ARXIV.ORG, CORNELL UNIVERSITY LIBRARY, 201 OLIN LIBRARY CORNELL UNIVERSITY ITHACA, NY 14853, 23 juin 2016 (2016-06-23), XP080710467,

## Description

La présente invention concerne un mécanisme de relais entre un ou plusieurs terminaux et une ou plusieurs passerelles dans un système de communication de type LPWAN (« Low-Power Wide-Area Network » en anglais).

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations de gaz ou d'eau, ou des collectes de mesures de capteurs d'une manière générale. L'Internet des Objets est considéré comme la troisième évolution de l'Internet, baptisée Web 3.0. L'Internet des Objets revêt un caractère universel pour désigner des objets communicants, appelés « objets connectés », aux usages variés, par exemple dans le domaine industriel, agro-alimentaire, de la e-santé ou de la domotique. Ces objets connectés sont typiquement des terminaux à faible consommation énergétique, en veille la plupart du temps, et se réveillant de temps en temps pour collecter des données (capteurs) et pour les transmettre par voie radio.

Dans le cadre de l'Internet des Objets, des passerelles situées sur des points géographiquement hauts sont déployées pour le compte d'un opérateur de service, afin de créer une infrastructure réseau pour permettre à ces objets connectés de communiquer. Hors opérations de maintenance, ces passerelles sont typiquement fixes et permanentes. On peut par exemple citer sur ce modèle les réseaux SigFox (marque déposée) ou ThingPark (marque déposée). Ces passerelles communiquent avec les objets connectés grâce à des systèmes de communication sans-fil moyenne ou longue portée de type LPWAN, comme par exemple la technologie LoRaWAN (marque déposée, « Long Range Wide-Area Network » en anglais), aussi connue sous le diminutif « LoRa » (marque déposée, « Long Range » en anglais) du nom de l'alliance faisant la promotion de technologies de réseaux étendus à longue portée LoRaWAN (marque déposée). Ces passerelles permettent à ces objets connectés de communiquer avec un serveur (réseau cœur), appelé LNS (pour « LoRa Network Server » en anglais, selon la terminologie de la technologie LoRaWAN), typiquement pour remonter des données collectées par lesdits objets connectés. Les passerelles communiquent avec le serveur LNS grâce à une infrastructure réseau, typiquement filaire, adaptée pour supporter la charge du trafic de données échangé entre lesdits objets connectés, lesdites passerelles et le serveur LNS. A noter que les échanges entre les passerelles et le serveur LNS utilisent en général un protocole propriétaire spécifique à l'opérateur de service (non normalisé) basé sur le protocole IP (« Internet Protocol » en anglais, tel que défini dans le document normatif RFC 791).

Le document « A Study of LoRa : Long Range & Low Power Networks for the Internet of Things », Aloÿs Augustin et al., Sensors, vol. 6, n° 19 (2016-09-09) décrit la technologie LoRa et en particulier un procédé de transmission faisant appel à la technologie LoRaWAN.

Le document « Low Power Wide Area Networks : A Survey », Usman Raza et al., Cornell University Library (2016-06-23) décrit des réseaux de communication basés sur différentes technologies de type LPWAN.

Un problème auquel est confronté l'opérateur de service est que certains objets connectés peuvent être hors de portée radio du système de communication de type LPWAN. Cela peut être dû au fait qu'une passerelle précédemment installée a été déconnectée pour maintenance ou qu'une zone géographique donnée n'est pas encore couverte par le déploiement des passerelles de l'opérateur de service. L'installation d'une passerelle est chronophage, car le fonctionnement d'une telle passerelle (en permanence à l'écoute du médium) impose une alimentation électrique par secteur. Il est donc souhaitable de fournir une solution qui permette de pallier, rapidement et à faible coût, un défaut de portée radio du système de communication de type LPWAN, de sorte à permettre à des objets connectés, qui sont hors de portée radio des passerelles déjà présentes dans le système de communication de type LPWAN, de bénéficier des services dudit système de communication. Il est notamment souhaitable de fournir une solution qui soit faiblement consommatrice en énergie, notamment en comparaison avec les passerelles du système de communication de type LPWAN. Il est en outre souhaitable de fournir une solution qui soit prête-à-l 'emploi (« Plug and Play » en anglais).

Pour ce faire, l'invention concerne un procédé de transmission dans un système de communication incluant un équipement serveur et au moins une passerelle connectée à l'équipement serveur, chaque passerelle étant configurée pour communiquer avec au moins un terminal via un réseau de communication de type LPWAN en utilisant un mode de communication, dit en Classe A, défini comme suit : ladite passerelle reçoit un message d'origine en provenance d'un dit terminal et propage ledit message d'origine reçu, à destination de l'équipement serveur ; sur réception d'un message de réponse de l'équipement serveur, ladite passerelle propage le message de réponse à destination dudit terminal en utilisant au moins une fenêtre de réception définie par rapport à un temps de transmission dudit message d'origine par ledit terminal. Le procédé est tel que le système de communication inclut en outre au moins un relais vu comme un terminal par chaque passerelle, chaque relais utilisant le mode de communication en Classe A pour communiquer avec une ou plusieurs dites passerelles, et utilisant pour communiquer avec un ou plusieurs terminaux un autre mode de communication, dit en Classe A', défini comme suit : le relais transmet à intervalles réguliers des balises, chaque balise incluant des informations représentatives d'au moins un intervalle de temps prédéfini par rapport à ladite balise ; le relais est à l'écoute d'éventuels messages d'origine émis par un ou plusieurs terminaux, à destination de l'équipement serveur, uniquement pendant chaque dit intervalle de temps ; en cas de message de réponse de l'équipement serveur fourni via une dite passerelle en mode de communication en Classe A, ledit relais propage le message de réponse à destination dudit terminal en utilisant au moins une autre fenêtre de réception définie par rapport à un temps de transmission dudit message d'origine par ledit terminal, chaque dite autre fenêtre de réception étant décalée postérieurement d'un temps prédéfini par rapport à chaque fenêtre de réception définie en mode de communication en Classe A. De plus, sur réception par un dit relais d'un message d'origine émis par un dit terminal en mode de communication en Classe A', ledit relais effectue les étapes suivantes : effectuer une encapsulation du message d'origine dans un autre message à destination de l'équipement serveur ; transmettre ledit autre message en mode de communication en Classe A, de sorte qu'au moins une dite passerelle propage ledit autre message à l'équipement serveur ; en cas de message de réponse de l'équipement serveur fourni via une dite passerelle en utilisant une fenêtre de réception définie en mode de communication en Classe A par rapport à la transmission dudit autre message par ledit relais, effectuer une des-encapsulation d'un autre message de réponse contenu dans ledit message de réponse et propager ledit autre message de réponse à destination dudit terminal dans une dite autre fenêtre de réception définie en mode de communication en Classe A' par rapport à la transmission dudit message d'origine par ledit terminal. En outre, sur réception d'un message propagé par une ou plusieurs passerelles, lorsque le message reçu inclut un message relayé par un dit relais, l'équipement serveur effectue les étapes suivantes : effectuer une des-encapsulation du message relayé ; traiter le message relayé, afin d'obtenir un message de réponse à adresser au terminal ayant émis le message qui a été relayé ; effectuer une encapsulation du message de réponse dans un autre message de réponse à adresser au relais ; et transmettre ledit autre message de réponse à une passerelle, afin que ladite passerelle propage ledit autre message de réponse audit relais dans une dite fenêtre de réception définie en mode de communication en Classe A par rapport à la transmission par ledit terminal dudit message propagé.

Ainsi, il est pallié un défaut de portée radio du système de communication de type LPWAN, de sorte à permettre à des terminaux (objets connectés), qui sont hors de portée radio des passerelles déjà présentes dans le système de communication de type LPWAN, de bénéficier des services dudit système de communication. Ce bénéfice est atteint à faible coût, puisque le relais peut être en veille la plupart du temps, grâce particulièrement à la définition du mode de communication en Classe A'.

Selon un mode de réalisation particulier, chaque relais est initialisé comme suit : ledit relais transmet un message d'enregistrement à destination de l'équipement serveur ; en cas de message de réponse de l'équipement serveur fourni via une dite passerelle, le relais transmet un message de récupération de paramètres de balises à destination de l'équipement serveur ; en cas de message de réponse de l'équipement serveur fourni via une dite passerelle, le relais programme l'envoi desdites balises et programme l'écoute pendant chaque dit intervalle de temps, ledit message de réponse incluant des informations représentatives de chaque dit intervalle de temps.

Ainsi, le relais est prêt-à-l'emploi et la portée radio du système de communication de type LPWAN peut être rapidement étendue.

Selon un mode de réalisation particulier, sur réception par un dit relais d'un message d'origine émis par un dit terminal en mode de communication en Classe A', le relais effectue les étapes suivantes : lorsque le message d'origine est un message d'enregistrement dudit terminal à destination de l'équipement serveur, ledit relais propage ledit message d'origine à destination de l'équipement serveur, et sur réception d'un message de réponse en provenance de l'équipement serveur, ledit relais considère que le ledit terminal est rattaché audit relais ; lorsque le message d'origine est un autre message, ledit relais propage ledit message d'origine à destination de l'équipement serveur uniquement si ledit terminal est rattaché audit relais.

Ainsi, les échanges sont limités en cas de présence de plusieurs relais qui utiliseraient les mêmes intervalles de temps pour écouter d'éventuels messages à relayer à destination de l'équipement serveur, en évitant que chaque relais se charge de propager ces éventuels messages. Cela permet en outre de préserver l'autonomie énergétique des relais.

Selon un mode de réalisation particulier, sur réception d'un message propagé par une ou plusieurs passerelles, lorsque le message reçu inclut un message relayé par un dit relais, l'équipement serveur détermine si le message relayé a aussi été reçu directement via au moins une dite passerelle, et si tel est le cas, l'équipement serveur effectue les étapes suivantes : traiter le message relayé, afin d'obtenir un message de réponse à adresser au terminal ayant émis le message qui a été relayé ; transmettre ledit message de réponse à une passerelle, afin que ladite passerelle propage ledit message de réponse audit terminal dans une dite fenêtre de réception définie en mode de communication en Classe A par rapport à la transmission par ledit terminal du message qui a été relayé ; transmettre au relais un message de détachement indiquant audit relais que ledit terminal n'est plus rattaché audit relais. De plus, le terminal est à l'écoute dans chaque dite fenêtre de réception définie en mode de communication en Classe A et dans chaque dite fenêtre de réception définie en mode de communication en Classe A', et lorsque ledit terminal reçoit un message de réponse dans une dite fenêtre de réception définie en mode de communication en Classe A, ledit terminal bascule en mode de communication en Classe A.

Ainsi, il est évité qu'un relais continue de propager des messages transmis par un terminal, alors que ledit terminal est désormais à portée d'au moins une passerelle du système de communication.

Selon un mode de réalisation particulier, deux fenêtres de réception sont définies en mode de communication en Classe A et deux fenêtres de réception sont définies en mode de communication en Classe A'.

Selon un mode de réalisation particulier, chaque fenêtre de réception en mode de communication en Classe A' est de durée supérieure à chaque fenêtre de réception correspondante en mode de communication en Classe A.

Ainsi, il est possible d'utiliser des relais ayant une précision d'horloge moindre que celle des passerelles du système de communication, et on tient compte des dégradations de qualité d'horloges dues à des synchronisations successives.

Selon un mode de réalisation particulier, l'équipement serveur comporte au moins une application de relais, chaque application de relais étant en charge d'effectuer les encapsulations et des-encapsulations vis-à-vis d'un ou plusieurs dits relais.

Ainsi, l'architecture de l'équipement serveur est simple.

L'invention concerne également un procédé, implémenté par un relais, dans le cadre d'une transmission dans un système de communication incluant un équipement serveur et au moins une passerelle connectée à l'équipement serveur, chaque passerelle étant configurée pour communiquer avec au moins un terminal via un réseau de communication de type LPWAN en utilisant un mode de communication, dit en Classe A, défini comme suit : ledit terminal souhaitant communiquer avec l'équipement serveur directement via une dite passerelle transmet un message d'origine à destination de l'équipement serveur ; ledit terminal est à l'écoute d'un éventuel message de réponse de l'équipement serveur propagé via une dite passerelle pendant au moins une fenêtre de réception définie par rapport à un temps de transmission dudit message d'origine par ledit terminal. De plus, le système de communication inclut en outre ledit relais qui est vu comme un terminal par chaque passerelle, ledit relais utilisant le mode de communication en Classe A pour communiquer avec une ou plusieurs dites passerelles, et utilisant pour communiquer avec un ou plusieurs terminaux un autre mode de communication, dit en Classe A', défini comme suit : le relais transmet à intervalles réguliers des balises, chaque balise incluant des informations représentatives d'au moins un intervalle de temps prédéfini par rapport à ladite balise ; le relais est à l'écoute d'éventuels messages d'origine émis par un ou plusieurs terminaux, à destination de l'équipement serveur, uniquement pendant chaque dit intervalle de temps ; en cas de message de réponse de l'équipement serveur fourni via une dite passerelle en mode de communication en Classe A, ledit relais propage le message de réponse à destination dudit terminal en utilisant au moins une autre fenêtre de réception définie par rapport à un temps de transmission dudit message d'origine par ledit terminal, chaque dite autre fenêtre de réception étant décalée postérieurement d'un temps prédéfini par rapport à chaque fenêtre de réception définie en mode de communication en Classe A. De plus, sur réception par ledit relais d'un message d'origine émis par un dit terminal en mode de communication en Classe A', ledit relais effectue les étapes suivantes : effectuer une encapsulation du message d'origine dans un autre message à destination de l'équipement serveur ; transmettre ledit autre message en mode de communication en Classe A, de sorte qu'au moins une dite passerelle propage ledit autre message à l'équipement serveur ; en cas de message de réponse de l'équipement serveur fourni via une dite passerelle en utilisant une fenêtre de réception définie en mode de communication en Classe A par rapport à la transmission dudit autre message par ledit relais, effectuer une des-encapsulation d'un autre message de réponse contenu dans ledit message de réponse et propager ledit autre message de réponse à destination dudit terminal dans une dite autre fenêtre de réception définie en mode de communication en Classe A' par rapport à la transmission dudit message d'origine par ledit terminal.

L'invention concerne également un procédé, implémenté par un terminal, dans le cadre d'une transmission dans un système de communication incluant un équipement serveur et au moins une passerelle connectée à l'équipement serveur, ledit terminal étant configuré pour communiquer avec au moins une dite passerelle via un réseau de communication de type LPWAN en utilisant un mode de communication, dit en Classe A, défini comme suit : ledit terminal souhaitant communiquer avec l'équipement serveur directement via une dite passerelle transmet un message d'origine à destination de l'équipement serveur ; ledit terminal est à l'écoute d'un éventuel message de réponse de l'équipement serveur propagé via une dite passerelle pendant au moins une fenêtre de réception définie par rapport à un temps de transmission dudit message d'origine par ledit terminal. De plus, le système de communication incluant en outre au moins un relais, ledit terminal est configuré pour communiquer avec chaque relais selon un autre mode de communication, dit en Classe A', défini comme suit : le terminal reçoit des balises émises par un dit relais, chaque balise incluant des informations représentatives d'au moins un intervalle de temps prédéfini par rapport à ladite balise ; ledit terminal souhaitant communiquer avec l'équipement serveur via ledit relais transmet un message d'origine à destination de l'équipement serveur, uniquement pendant un dit intervalle de temps ; et ledit terminal est à l'écoute d'un éventuel message de réponse de l'équipement serveur propagé via ledit relais pendant au moins une autre fenêtre de réception définie par rapport à un temps de transmission dudit message d'origine par ledit terminal, chaque dite autre fenêtre de réception étant décalée postérieurement d'un temps prédéfini par rapport à chaque fenêtre de réception définie en mode de communication en Classe A.

L'invention concerne également un procédé, implémenté par un équipement serveur, dans le cadre d'une transmission dans un système de communication incluant ledit équipement serveur et au moins une passerelle connectée à l'équipement serveur, chaque passerelle étant configurée pour communiquer avec au moins un terminal via un réseau de communication de type LPWAN. Le procédé est tel que, le système de communication incluant en outre au moins un relais, sur réception d'un message propagé par une ou plusieurs passerelles, lorsque le message reçu inclut un message relayé par un dit relais, l'équipement serveur effectue les étapes suivantes : effectuer une des-encapsulation du message relayé ; traiter le message relayé, afin d'obtenir un message de réponse à adresser au terminal ayant émis le message qui a été relayé ; effectuer une encapsulation du message de réponse dans un autre message de réponse à adresser au relais ; et transmettre ledit autre message de réponse à une passerelle, afin que ladite passerelle propage ledit autre message de réponse audit relais.

L'invention concerne également un système de communication incluant un équipement serveur et au moins une passerelle connectée à l'équipement serveur, chaque passerelle étant configurée pour communiquer avec au moins un terminal via un réseau de communication de type LPWAN en utilisant un mode de communication, dit en Classe A, défini comme suit : ladite passerelle est configurée pour recevoir un message d'origine en provenance d'un dit terminal et propage ledit message d'origine reçu, à destination de l'équipement serveur ; sur réception d'un message de réponse de l'équipement serveur, ladite passerelle est configurée pour propager le message de réponse à destination dudit terminal en utilisant au moins une fenêtre de réception définie par rapport à un temps de transmission dudit message d'origine par ledit terminal. De plus, le système de communication inclut en outre au moins un relais vu comme un terminal par chaque passerelle, chaque relais étant configuré pour utiliser le mode de communication en Classe A pour communiquer avec une ou plusieurs dites passerelles, et pour utiliser pour communiquer avec un ou plusieurs terminaux un autre mode de communication, dit en Classe A', défini comme suit : le relais est configuré pour transmettre à intervalles réguliers des balises, chaque balise incluant des informations représentatives d'au moins un intervalle de temps prédéfini par rapport à ladite balise ; le relais est configuré pour être à l'écoute d'éventuels messages d'origine émis par un ou plusieurs terminaux, à destination de l'équipement serveur, uniquement pendant chaque dit intervalle de temps ; en cas de message de réponse de l'équipement serveur fourni via une dite passerelle en mode de communication en Classe A, ledit relais est configuré pour propager le message de réponse à destination dudit terminal en utilisant au moins une autre fenêtre de réception définie par rapport à un temps de transmission dudit message d'origine par ledit terminal, chaque dite autre fenêtre de réception étant décalée postérieurement d'un temps prédéfini par rapport à chaque fenêtre de réception définie en mode de communication en Classe A. De plus, sur réception par un dit relais d'un message d'origine émis par un dit terminal en mode de communication en Classe A', ledit relais implémente : des moyens pour effectuer une encapsulation du message d'origine dans un autre message à destination de l'équipement serveur ; des moyens pour transmettre ledit autre message en mode de communication en Classe A, de sorte qu'au moins une dite passerelle propage ledit autre message à l'équipement serveur ; en cas de message de réponse de l'équipement serveur fourni via une dite passerelle en utilisant une fenêtre de réception définie en mode de communication en Classe A par rapport à la transmission dudit autre message par ledit relais, des moyens pour effectuer une des-encapsulation d'un autre message de réponse contenu dans ledit message de réponse et des moyens pour propager ledit autre message de réponse à destination dudit terminal dans une dite autre fenêtre de réception définie en mode de communication en Classe A' par rapport à la transmission dudit message d'origine par ledit terminal. De plus, sur réception d'un message propagé par une ou plusieurs passerelles, lorsque le message reçu inclut un message relayé par un dit relais, l'équipement serveur implémente : des moyens pour effectuer une des-encapsulation du message relayé ; des moyens pour traiter le message relayé, afin d'obtenir un message de réponse à adresser au terminal ayant émis le message qui a été relayé ; des moyens pour effectuer une encapsulation du message de réponse dans un autre message de réponse à adresser au relais ; et des moyens pour transmettre ledit autre message de réponse à une passerelle, afin que ladite passerelle propage ledit autre message de réponse audit relais dans une dite fenêtre de réception définie en mode de communication en Classe A par rapport à la transmission par ledit terminal dudit message propagé.

L'invention concerne également un relais destiné à être utilisé dans un système de communication incluant un équipement serveur et au moins une passerelle connectée à l'équipement serveur, chaque passerelle étant configurée pour communiquer avec au moins un terminal via un réseau de communication de type LPWAN en utilisant un mode de communication, dit en Classe A, défini comme suit : ledit terminal souhaitant communiquer avec l'équipement serveur directement via une dite passerelle est configuré pour transmettre un message d'origine à destination de l'équipement serveur ; ledit terminal est configuré pour être à l'écoute d'un éventuel message de réponse de l'équipement serveur propagé via une dite passerelle pendant au moins une fenêtre de réception définie par rapport à un temps de transmission dudit message d'origine par ledit terminal. De plus, ledit relais étant vu comme un terminal par chaque passerelle, ledit relais est configuré pour utiliser le mode de communication en Classe A pour communiquer avec une ou plusieurs dites passerelles, et pour utiliser pour communiquer avec un ou plusieurs terminaux un autre mode de communication, dit en Classe A', défini comme suit : le relais est configuré pour transmettre à intervalles réguliers des balises, chaque balise incluant des informations représentatives d'au moins un intervalle de temps prédéfini par rapport à ladite balise ; le relais est configuré pour être à l'écoute d'éventuels messages d'origine émis par un ou plusieurs terminaux, à destination de l'équipement serveur, uniquement pendant chaque dit intervalle de temps ; en cas de message de réponse de l'équipement serveur fourni via une dite passerelle en mode de communication en Classe A, ledit relais est configuré pour propager le message de réponse à destination dudit terminal en utilisant au moins une autre fenêtre de réception définie par rapport à un temps de transmission dudit message d'origine par ledit terminal, chaque dite autre fenêtre de réception étant décalée postérieurement d'un temps prédéfini par rapport à chaque fenêtre de réception définie en mode de communication en Classe A. De plus, sur réception par ledit relais d'un message d'origine émis par un dit terminal en mode de communication en Classe A', ledit relais implémente : des moyens pour effectuer une encapsulation du message d'origine dans un autre message à destination de l'équipement serveur ; des moyens pour transmettre ledit autre message en mode de communication en Classe A, de sorte qu'au moins une dite passerelle propage ledit autre message à l'équipement serveur ; en cas de message de réponse de l'équipement serveur fourni via une dite passerelle en utilisant une fenêtre de réception définie en mode de communication en Classe A par rapport à la transmission dudit autre message par ledit relais, des moyens pour effectuer une des-encapsulation d'un autre message de réponse contenu dans ledit message de réponse et des moyens pour propager ledit autre message de réponse à destination dudit terminal dans une dite autre fenêtre de réception définie en mode de communication en Classe A' par rapport à la transmission dudit message d'origine par ledit terminal.

L'invention concerne également un terminal destiné à être utilisé avec un système de communication incluant un équipement serveur et au moins une passerelle connectée à l'équipement serveur, ledit terminal étant configuré pour communiquer avec au moins une dite passerelle via un réseau de communication de type LPWAN en utilisant un mode de communication, dit en Classe A, défini comme suit : ledit terminal souhaitant communiquer avec l'équipement serveur directement via une dite passerelle est configuré pour transmettre un message d'origine à destination de l'équipement serveur ; ledit terminal est configuré pour être à l'écoute d'un éventuel message de réponse de l'équipement serveur propagé via une dite passerelle pendant au moins une fenêtre de réception définie par rapport à un temps de transmission dudit message d'origine par ledit terminal. De plus, le système de communication incluant en outre au moins un relais, ledit terminal est configuré pour communiquer avec chaque relais selon un autre mode de communication, dit en Classe A', défini comme suit : le terminal est configuré pour recevoir des balises émises par un dit relais, chaque balise incluant des informations représentatives d'au moins un intervalle de temps prédéfini par rapport à ladite balise ; ledit terminal souhaitant communiquer avec l'équipement serveur via ledit relais est configuré pour transmettre un message d'origine à destination de l'équipement serveur, uniquement pendant un dit intervalle de temps ; ledit terminal est configuré pour être à l'écoute d'un éventuel message de réponse de l'équipement serveur propagé via ledit relais pendant au moins une autre fenêtre de réception définie par rapport à un temps de transmission dudit message d'origine par ledit terminal, chaque dite autre fenêtre de réception étant décalée postérieurement d'un temps prédéfini par rapport à chaque fenêtre de réception définie en mode de communication en Classe A.

L'invention concerne également un équipement serveur destiné à être utilisé dans un système de communication incluant ledit équipement serveur et au moins une passerelle connectée à l'équipement serveur, chaque passerelle étant configurée pour communiquer avec au moins un terminal via un réseau de communication de type LPWAN. Le système de communication incluant en outre au moins un relais, sur réception d'un message propagé par une ou plusieurs passerelles, lorsque le message reçu inclut un message relayé par un dit relais, l'équipement serveur implémente : des moyens pour effectuer une des-encapsulation du message relayé ; des moyens pour traiter le message relayé, afin d'obtenir un message de réponse à adresser au terminal ayant émis le message qui a été relayé ; des moyens pour effectuer une encapsulation du message de réponse dans un autre message de réponse à adresser au relais ; et des moyens pour transmettre ledit autre message de réponse à une passerelle, afin que ladite passerelle propage ledit autre message de réponse audit relais.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus vis-à-vis du relais ou le procédé mentionné ci-dessus vis-à-vis du terminal ou le procédé mentionné ci-dessus vis-à-vis de l'équipement serveur, lorsque ledit programme est exécuté par le processeur. L'invention concerne également un medium de stockage d'informations stockant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication incluant un équipement serveur, au moins une passerelle, au moins un relais et au moins un terminal ;
- la Fig. 2 illustre schématiquement un exemple d'architecture matérielle d'un dit relais et/ou d'un dit terminal et/ou de l'équipement serveur ;
- les Figs. 3A à 3E illustrent schématiquement des séquencements de communications dans le cadre du système de communication de la Fig. 1 ;
- la Fig. 4 illustre schématiquement un algorithme, implémenté par chaque relais, d'initialisation dudit relais ;
- la Fig. 5 illustre schématiquement un algorithme, implémenté par chaque terminal, d'enregistrement dudit terminal auprès de l'équipement serveur ;
- la Fig. 6 illustre schématiquement un algorithme, implémenté par chaque terminal, de transmission de données à l'équipement serveur ;
- la Fig. 7 illustre schématiquement un algorithme, implémenté par chaque relais, de propagation de données à destination de l'équipement serveur ;
- la Fig. 8 illustre schématiquement un algorithme, implémenté par l'équipement serveur, pour enregistrer chaque relais lors de l'initialisation dudit relais ;
- la Fig. 9 illustre schématiquement un algorithme, implémenté par l'équipement serveur, pour traiter un premier type de message relayé ;
- la Fig. 10 illustre schématiquement un algorithme, implémenté par l'équipement serveur, pour traiter un second type de message relayé ; et
- la Fig. 11 illustre schématiquement un exemple d'échanges de messages au sein du système de communication, en application d'un mode de réalisation de la présente invention.

L'invention est plus particulièrement décrite ci-après dans un contexte d'infrastructure réseau de type LoRaWAN (marque déposée), en utilisant notamment des terminologies que l'on retrouve dans les spécifications LoRaWAN (marque déposée). Les principes et implémentations décrits ci-après s'appliquent cependant, de manière plus générale, à un contexte d'infrastructure réseau de type LPWAN.

De plus, l'invention est plus particulièrement décrite ci-après en utilisant deux fenêtres de réception en mode de transmission en Classe A, comme dans les spécifications LoRaWAN (marque déposée). Toutefois, il convient de noter qu'une quantité différente de fenêtres de réception en mode de transmission en Classe A peut être utilisée, et notamment une seule fenêtre de réception en mode de transmission en Classe A.

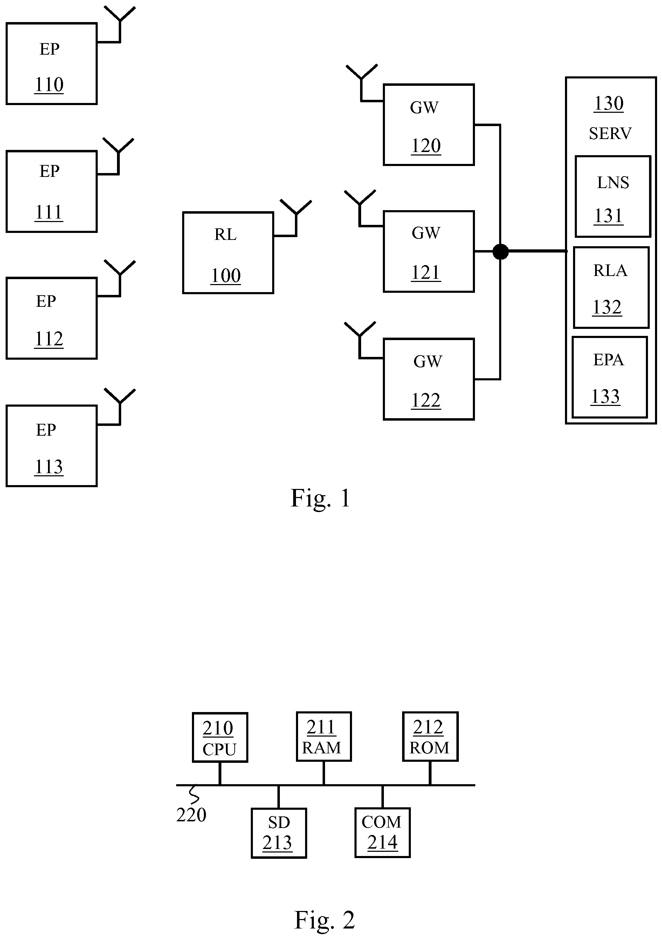

La **Fig. 1** illustre schématiquement un système de communication dans lequel la présente invention est implémentée.

Le système de communication comporte une pluralité de passerelles GW, qui disposent de liens de communication respectifs avec un équipement serveur SERV 130 auquel lesdites passerelles GW sont rattachées. Selon un mode de réalisation particulier, chaque passerelle GW intègre une fonction d'accès à l'Internet et le lien de communication entre ladite passerelle avec l'équipement serveur SERV 130 repose sur le protocole IP. Considérons à titre illustratif que le système de communication comporte trois passerelles GW 120, 121, 122.

Dans le système de communication, des messages doivent être remontés jusqu'à l'équipement serveur SERV 130 sous forme de trames depuis chaque terminal EP (« End-Point » en anglais) d'un ensemble de terminaux EP dudit système de communication. Considérons à titre illustratif que le système de communication comporte quatre terminaux EP 110, 111, 112, 113.

Pour permettre aux terminaux EP de communiquer indirectement avec l'équipement serveur SERV 130, chaque passerelle GW comporte une interface radio permettant à ladite passerelle de communiquer avec lesdits terminaux EP en s'appuyant sur un réseau de communication sans-fil, et préférentiellement selon une technologie de communication de type LPWAN (pour peu que la portée radio de la technologie de communication le permette). Ladite interface radio est préférentiellement de type LoRa (marque déposée) permettant ainsi d'implémenter, au sein du système de communication, un protocole de transmission de données de type LoRaWAN (marque déposée).

Pour pallier un éventuel manque de portée radio de la technologie de communication de type LPWAN, notamment lorsqu'une ou plusieurs passerelles GW sont en maintenance ou en attendant que le déploiement des passerelles GW soit achevé, le système de communication inclut un ou plusieurs relais RL. Considérons à titre illustratif dans le cadre de la Fig. 1 que le système de communication inclut un seul relais RL 100.

Le relais RL 100 vise donc à s'intercaler entre un ou plusieurs terminaux EP et une ou plusieurs passerelles GW du système de communication. Le relais RL 100 utilise donc, pour communiquer avec les terminaux EP et les passerelles GW, la même couche physique de communication que les terminaux EP et les passerelles GW les uns avec les autres. Comme détaillé par la suite, l'accès au medium de communication est cependant différent lorsque le relais RL 100 intervient dans les communications entre les terminaux EP et l'équipement serveur SERV 130.

Le relais RL 100 est un dispositif « dormant ». Cela signifie que le relais RL 100 est en veille à l'exception des situations suivantes :
- lors d'intervalles de temps prédéterminés pendant lesquels le relais RL 100 doit émettre des balises, ainsi que de périodes de temps nécessaires à la gestion desdites balises ;
- lors d'intervalles de temps prédéterminés pendant lesquels un ou plusieurs terminaux EP sont autorisés à transmettre des messages à relayer par le relais RL 100, ainsi que de périodes de temps nécessaires à la gestion desdits messages ;
- lors d'intervalles de temps prédéterminés pendant lesquels le relais RL 100 est autorisé à envoyer des réponses à des messages transmis par un ou plusieurs terminaux EP et que le relais RL 100 a relayés, ainsi que de périodes de temps nécessaires à la gestion desdites réponses ;
- lors d'intervalles de temps prédéterminés pendant lesquels le relais RL 100 doit transmettre des messages à destination de l'équipement serveur SERV 130, ainsi que de périodes de temps nécessaires à la gestion desdits messages ;
- lors d'intervalles de temps prédéterminés pendant lesquels une quelconque desdites passerelles GW 120, 121, 122 est autorisée à envoyer des réponses à des messages envoyés par le relais RL 100 à destination de l'équipement serveur SERV 130, ainsi que de périodes de temps nécessaires à la gestion desdites réponses ; et
- lors d'autres traitements prédéterminés à la charge du relais RL 100.

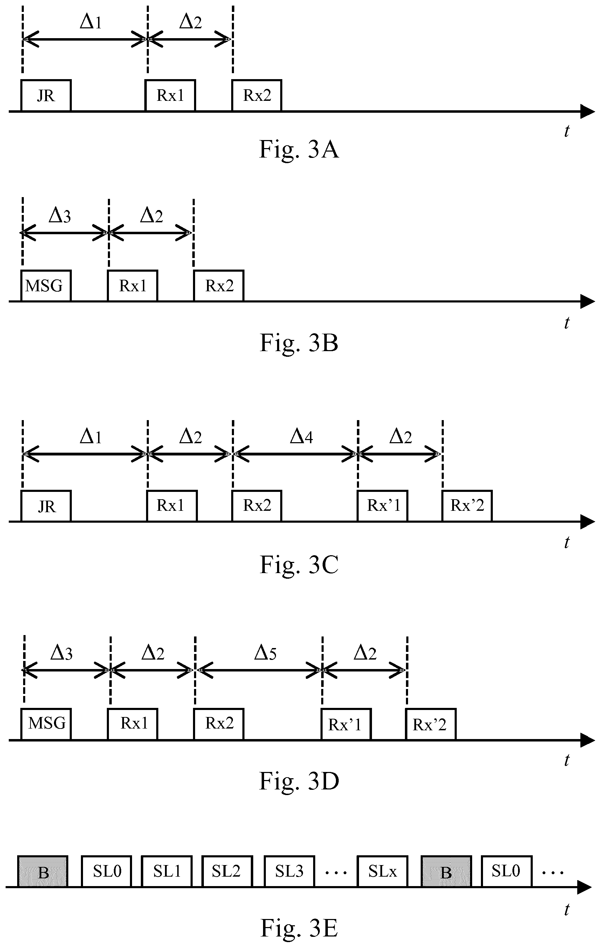

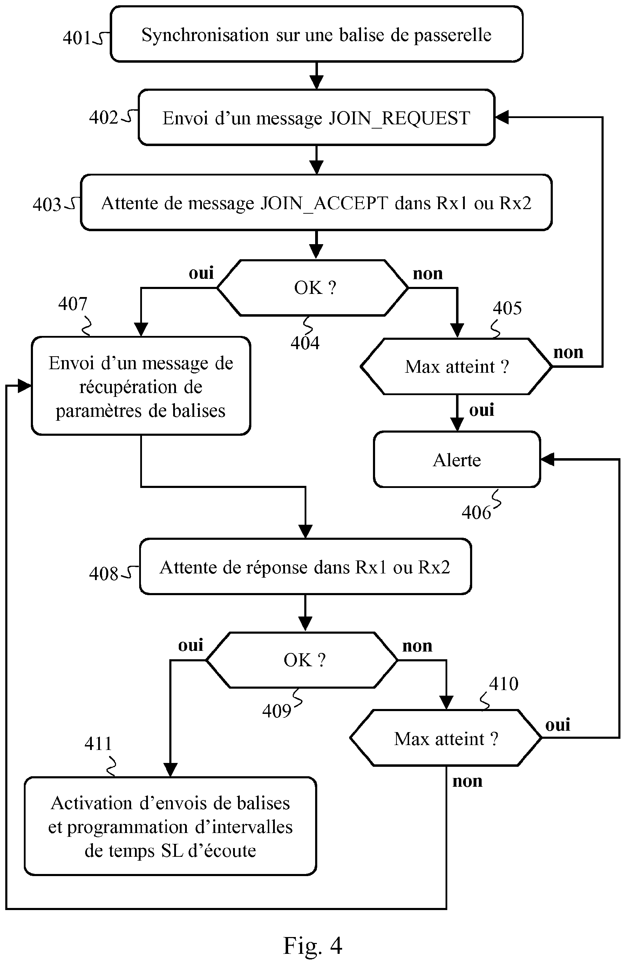

En effet, le relais RL 100 a vocation à pallier, à moindre coût, l'absence de passerelle GW pour couvrir une zone géographique dans laquelle sont situés (ou potentiellement situés) des terminaux EP. Le relais RL 100 est alors alimenté de manière autonome, par batterie ou par panneau solaire, et préserve son énergie en ne se réveillant que quand cela est rendu nécessaire pour effectuer le relais entre un ou plusieurs terminaux EP et le reste du système de communication (ou quand cela est rendu nécessaire pour effectuer d'autres traitements prédéterminés dont le relais RL 100 a la charge). Pour pouvoir se mettre en veille autant que possible, le relais RL 100 applique, dans ses communications indirectes avec l'équipement serveur SERV 130 (donc via une ou plusieurs passerelles GW), un premier mécanisme de communication décrit ci-après en relation avec les Figs. 3A et 3B. Ce premier mécanisme de communication correspond au mode de communication, dit en « Classe A », dans le protocole de transmission de données de type LoRaWAN (marque déposée). De plus, le relais RL 100 applique, dans ses communications avec tout équipement EP, un second mécanisme de communication décrit ci-après en relation avec les Figs. 3C, 3D et 3E. Ce second mécanisme de communication est donc un autre mode de communication, dit en « Classe A' », différent du mode de communication en Classe A (ainsi que du mode de communication, dit en « Classe B », dans le protocole de transmission de données de type LoRaWAN (marque déposée), même si le mode de communication en Classe A' repose aussi sur des transmissions de balises). Afin de permettre une mise en place de ces mécanismes de communication, le relais RL 100 est initialisé comme décrit ci-après en relation avec la Fig. 4.

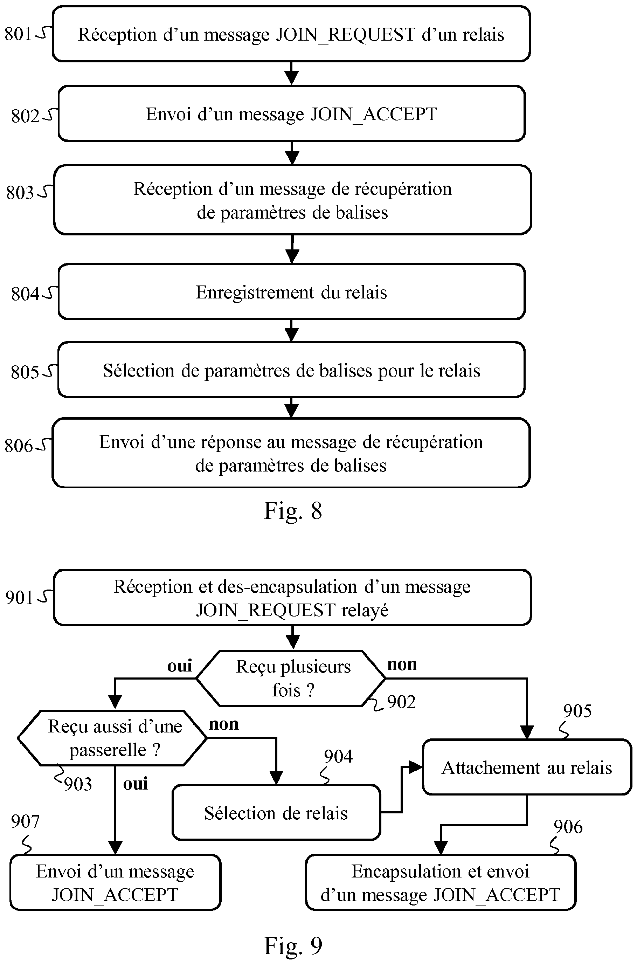

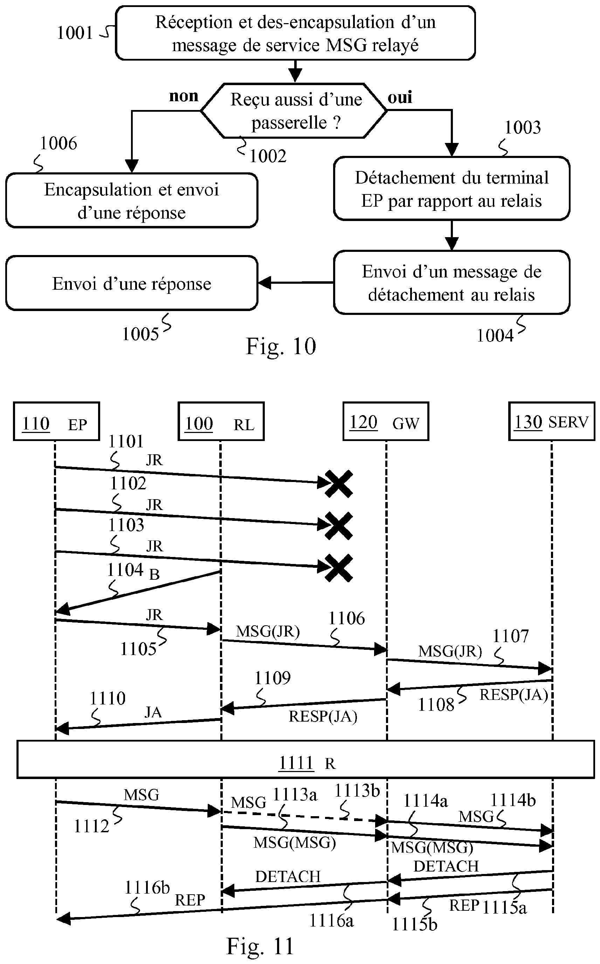

Dans un mode de réalisation particulier de l'équipement serveur SERV 130, l'équipement serveur SERV 130 inclut un serveur LNS 131 qui a un rôle de contrôle et de collecte d'informations auprès des terminaux EP 110, 111, 112, 113 via les passerelles GW 120, 121, 122. L'équipement serveur SERV 130 inclut en outre une ou plusieurs applications de terminal EPA 133, en charge de traiter les informations collectées par le serveur LNS 131 auprès des terminaux EP 110, 111, 112, 113 et en charge d'envoyer des réponses (incluant des acquittements de données et potentiellement des commandes) aux terminaux EP 110, 111, 112, 113. Une même application de terminal EPA 133 peut prendre en charge un ou plusieurs terminaux EP. De plus, afin de prendre en compte la présence du relais RL 100 et la rendre transparente auprès des passerelles GW 120, 121, 122, l'équipement serveur SERV 130 inclut en outre une ou plusieurs applications de relais RLA, en charge d'effectuer des opérations d'encapsulation et de des-encapsulation, comme expliqué ci-après notamment en relation avec les Figs. 9 et 10. Une même application de relais RLA peut prendre en charge un ou plusieurs relais RL. Le serveur LNS 131 est alors en charge de gérer les transferts de données et d'informations au sein de l'équipement serveur SERV 130, plus particulièrement vis-à-vis de l'application de terminal EPA 133 et de l'application de relais RLA 132.

A noter que l'équipement serveur SERV 130 peut être constitué d'une seule machine ou d'un ensemble de machines interconnectées. Notamment, l'équipement serveur SERV 130 peut être tel que le serveur LNS 131 et l'application de relais RLA 132 d'un côté, et les applications de terminal EPA 133 de l'autre côté, sont implémentés par des machines distinctes.

Un exemple d'architecture matérielle applicable aux relais RL, aux terminaux EP et à l'équipement serveur SERV 130 est schématiquement illustré par la **Fig. 2****.** Considérons à titre illustratif le cas du relais RL 100.

Le relais RL 100 comporte alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) 213 ; et, une interface de communication COM 214. L'interface de communication COM 214 permet au relais RL 100 de communiquer avec une ou plusieurs passerelles GW, ainsi qu'avec un ou plusieurs quelconques terminaux EP implémentant la technologie de communication de type LPWAN.

Lorsque l'exemple d'architecture matérielle représente l'équipement serveur SERV 130, l'unité de stockage 213 est préférentiellement un ou plusieurs disques durs HDD (« Hard Disk Drive » en anglais). De plus, l'interface de communication COM 214 permet alors notamment à l'équipement serveur SERV 130 de communiquer avec chacune des passerelles GW 120, 121, 122.

Lorsque l'exemple d'architecture matérielle représente un terminal EP, l'interface de communication COM 214 permet alors notamment audit terminal EP de communiquer selon la technologie de communication de type LPWAN (afin de communiquer).

Le processeur 210 est capable d'exécuter des instructions chargées dans la RAM 211 à partir de la ROM 212, d'une mémoire externe, d'un support de stockage, ou d'un réseau de communication. Lorsque le relais RL 100 est mis sous tension, le processeur 210 est capable de lire de la RAM 211 des instructions et de les exécuter. Ces instructions forment un programme d'ordinateur causant l'implémentation, par le processeur 210, de tout ou partie des algorithmes et étapes décrits ici en relation avec le relais RL 100 en question. Ce principe s'applique de manière analogue à chaque terminal EP et à l'équipement serveur SERV 130.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

Les Figs. 3A à 3E illustrent schématiquement des séquencements de communications dans le cadre de l'accès au medium de communication selon la technologie LPWAN au sein du système de communication.

La **Fig. 3A** illustre schématiquement un séquencement de communications, appliqué lorsqu'un terminal EP souhaite transmettre un message de requête d'enregistrement, appelé JOIN_REQUEST (JR), à l'équipement serveur SERV 130 en communiquant directement avec une ou plusieurs passerelles GW. A noter que la voie montante peut être réalisée via plusieurs passerelles GW qui reçoivent en parallèle le message JOIN_REQUEST, alors que l'équipement serveur SERV 130 choisit une passerelle GW pour réaliser la voie descendante. Lorsque le terminal EP souhaite transmettre un tel message JOIN_REQUEST, ledit terminal EP accède au medium de communication après avoir attendu que soit écoulée une durée aléatoire (bornée). Ledit terminal EP transmet ainsi son message JOIN_REQUEST, ce qui définit une première fenêtre de réception Rx1 et une seconde fenêtre de réception Rx2. En réponse au message JOIN_REQUEST, le terminal EP est censé recevoir un message de réponse, appelé JOIN_ACCEPT, dans la première fenêtre de réception Rx1 ou dans la seconde fenêtre de réception Rx2. Cela permet au terminal EP de se mettre en veille après avoir envoyé le message JOIN_REQUEST et savoir exactement à quels moments se réveiller pour recevoir une éventuelle réponse au message JOIN_REQUEST. La première fenêtre de réception Rx1 est définie à un temps Δ1 par rapport à l'envoi du message JOIN_REQUEST et la seconde fenêtre de réception Rx2 est définie à un temps Δ2 par rapport à la première fenêtre de réception Rx1. Par exemple, Δ1 vaut 5 secondes et Δ2 vaut 1 seconde. La première fenêtre de réception Rx1 et la seconde fenêtre de réception Rx2 sont préférentiellement de même taille.

Le séquencement de communications montré sur la Fig. 3A est aussi utilisé par tout relais RL pour lui-même transmettre un message JOIN_REQUEST à l'équipement serveur SERV 130 en communiquant avec une ou plusieurs passerelles GW.

La **Fig. 3B** illustre schématiquement un séquencement de communications, appliqué lorsqu'un terminal EP souhaite transmettre un message de service MSG à l'équipement serveur SERV 130 en communiquant directement avec une ou plusieurs passerelles GW. Un message de service MSG est un message de tout type transmis en voie montante par le terminal EP après enregistrement auprès de l'équipement serveur SERV 130 (*i.e.* en dehors du message JOIN_REQUEST). Lorsque le terminal EP souhaite transmettre un tel message de service MSG, ledit terminal EP accède au medium de communication après avoir attendu que soit écoulée une durée aléatoire (bornée). Ledit terminal EP transmet ainsi son message de service MSG, ce qui définit la première fenêtre de réception Rx1 et la seconde fenêtre de réception Rx2. En réponse au message de service MSG, le terminal EP est censé recevoir un message de réponse dans la première fenêtre de réception Rx1 ou dans la seconde fenêtre de réception Rx2. Cela permet au terminal EP de se mettre en veille après avoir envoyé le message de service et savoir exactement à quel moment se réveiller pour recevoir une éventuelle réponse audit message de service. Ce qui diffère par rapport à la Fig. 3A est que la première fenêtre de réception Rx1 est définie à un temps Δ3 < Δ1 par rapport à l'envoi du message de service MSG, la seconde fenêtre de réception Rx1 restant définie à un temps Δ2 par rapport à la première fenêtre de réception Rx1. Par exemple, Δ3 vaut 1 seconde. Il est en effet considéré que les traitements impliqués par un message JOIN_REQUEST sont plus chronophages que ceux impliqués par un message de service.

Le séquencement de communications montré sur la Fig. 3B est aussi utilisé par tout relais RL pour transmettre un message de service MSG (notamment en ce qui concerne les messages encapsulant des messages initialement transmis par un terminal EP dont ledit relais RL a la charge, tel que détaillé par la suite) à l'équipement serveur SERV 130 en communiquant avec une ou plusieurs passerelles GW.

Les séquencements de communications montrés sur les Figs. 3A et 3B définissent ainsi le mode de communication en Classe A déjà évoqué. Une plus grande quantité de fenêtres de réception peut être utilisée. Une seule fenêtre de réception peut aussi être utilisée.

Considérons à titre illustratif dans le cadre des Figs. 3C, 3D et 3E que le système de communication ne comporte qu'un seul relais RL, à savoir le relais RL 100.

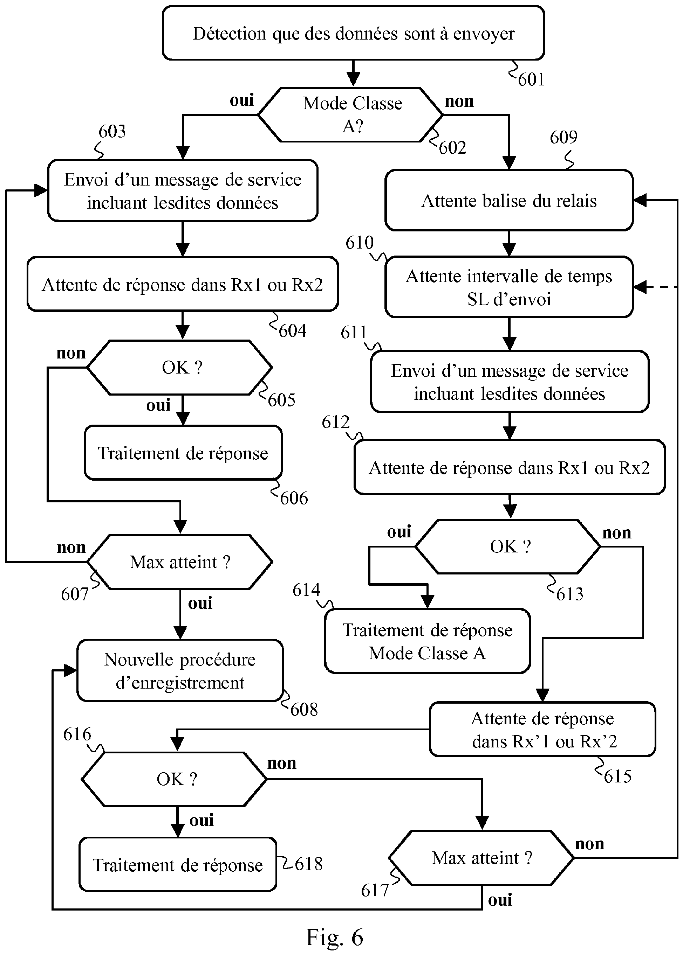

La **Fig. 3C** illustre schématiquement un séquencement de communications, appliqué lorsqu'un terminal EP souhaite transmettre un message JOIN_REQUEST à l'équipement serveur SERV 130 en s'appuyant sur le relais RL 100. Lorsque le terminal EP souhaite transmettre un tel message JOIN_REQUEST, ledit terminal EP accède au medium de communication dans un intervalle de temps prédéterminé, tel que décrit ci-après en relation avec la Fig. 3E. Ledit terminal EP transmet ainsi son message JOIN_REQUEST, ce qui définit la première fenêtre de réception Rx1 et la seconde fenêtre de réception Rx2, comme déjà décrit en relation avec la Fig. 3A. La définition de la première fenêtre de réception Rx1 et de la seconde fenêtre de réception Rx2 permet au terminal EP de détecter lorsque ledit terminal EP n'a plus besoin de s'appuyer sur le relais RL 100 pour communiquer avec l'équipement serveur SERV 130, tel que détaillé ci-après en relation avec les Figs. 6, 10 et 11. Lorsque ledit terminal EP transmet son message JOIN_REQUEST, cela définit aussi une troisième fenêtre de réception Rx'1 et une quatrième fenêtre de réception Rx'2. La troisième fenêtre de réception Rx'1 est définie à un temps Δ4 ≥ Δ1 par rapport à la première fenêtre de réception Rx1, et la quatrième fenêtre de réception Rx'2 est définie à un temps Δ2 par rapport à la troisième fenêtre de réception Rx'1. A noter donc que le temps Δ4 est typiquement supérieur au temps Δ1 du fait de la présence du relais RL 100 dans la chaîne de transmission entre le terminal EP en question et l'équipement serveur SERV 130. Le temps Δ4 peut toutefois être égal au temps Δ1, notamment en partant du principe que le temps Δ1 a été défini avec une marge confortable pour apporter de la flexibilité au système de communication dans les opérations à effectuer dans le cadre de l'enregistrement d'un terminal EP.

La troisième fenêtre de réception Rx'1 et la quatrième fenêtre de réception Rx'2 sont préférentiellement de même taille. La troisième fenêtre de réception Rx'1 peut être de même taille que la première fenêtre de réception Rx1, et la quatrième fenêtre de réception Rx'2 peut être de même taille que la seconde fenêtre de réception Rx2. Dans un mode de réalisation préférentiel, la troisième fenêtre de réception Rx'1 est agrandie d'une marge ε par rapport à la première fenêtre de réception Rx1 et la quatrième fenêtre de réception Rx'2 est agrandie d'une marge ε par rapport à la première fenêtre de réception Rx2, afin de relâcher les contraintes de précision d'horloge, et d'une manière générale les contraintes de fabrication, du relais RL 100 par rapport à celles des passerelles GW.

En réponse au message JOIN_REQUEST, le terminal EP est censé recevoir un message JOIN_ACCEPT dans la troisième fenêtre de réception Rx'1 ou dans la quatrième fenêtre de réception Rx'2, sauf si une passerelle GW est devenue à portée radio dudit terminal EP, auquel cas le message JOIN_ACCEPT est transmis dans la première fenêtre de réception Rx1 ou dans la seconde fenêtre de réception Rx2. Cet agencement permet au terminal EP de se mettre en veille après avoir envoyé le message JOIN_REQUEST et savoir exactement à quel moment se réveiller pour recevoir une éventuelle réponse au message JOIN_REQUEST lorsque ledit terminal EP s'appuie sur le relais RL 100 pour communiquer avec l'équipement serveur SERV 130.

Moyennant la marge éventuelle ε susmentionnée, les définitions de la troisième fenêtre de réception Rx'1 et la quatrième fenêtre de réception Rx'2 sont des répliques respectives, décalées dans le temps (temps Δ4), des définitions de la première fenêtre de réception Rx1 et de la seconde fenêtre de réception Rx2. Préférentiellement, les mêmes configurations de transmission (schéma de modulation et de codage,...) y sont respectivement utilisées.

La **Fig. 3D** illustre schématiquement un séquencement de communications, appliqué lorsqu'un terminal EP souhaite transmettre un message de service MSG à l'équipement serveur SERV 130 en s'appuyant sur le relais RL 100. Lorsque le terminal EP souhaite transmettre un tel message de service MSG, ledit terminal EP accède au medium de communication dans un intervalle de temps prédéterminé, tel que décrit ci-après en relation avec la Fig. 3E. Ledit terminal EP transmet ainsi son message de service MSG, ce qui définit la première fenêtre de réception Rx1 et la seconde fenêtre de réception Rx2, ainsi que la troisième fenêtre de réception Rx'1 et la quatrième fenêtre de réception Rx'2. Comme pour la Fig. 3B, la première fenêtre de réception Rx1 est définie à un temps Δ3 < Δ1 par rapport à l'envoi du message de service MSG, et comme pour la Fig. 3C, la troisième fenêtre de réception Rx'1 est définie à un temps Δ5 ≥ Δ3 par rapport à la première fenêtre de réception Rx1. A noter donc que le temps Δ5 est typiquement supérieur au temps Δ3 du fait de la présence du relais RL 100 dans la chaîne de transmission entre le terminal EP en question et l'équipement serveur SERV 130. Le temps Δ5 peut toutefois être égal au temps Δ3, notamment en partant du principe que le temps Δ3 a été défini avec une marge confortable pour apporter de la flexibilité au système de communication dans les opérations à effectuer dans le cadre du traitement des messages de service MSG. Le temps Δ5 est préférentiellement égal au temps Δ4 et au temps Δ1, par souci de simplicité de configuration du système de communication.

En réponse au message de service MSG, le terminal EP est censé recevoir un message de réponse correspondant dans la troisième fenêtre de réception Rx' 1 ou dans la quatrième fenêtre de réception Rx'2, sauf si une passerelle GW est devenue à portée radio dudit terminal EP, auquel cas ledit message de réponse est transmis dans la première fenêtre de réception Rx1 ou dans la seconde fenêtre de réception Rx2. Cet agencement permet au terminal EP de se mettre en veille après avoir envoyé le message de service MSG et savoir exactement à quels moments se réveiller pour recevoir une éventuelle réponse au message de service MSG lorsque ledit terminal EP s'appuie sur le relais RL 100 pour communiquer avec l'équipement serveur SERV 130.

Comme pour les temps Δ1, Δ2 et Δ3, les temps Δ4 et Δ5 sont pré-renseignés au sein de tout terminal EP ayant conscience (« awareness » en anglais) de la potentielle présence du relais RL 100 dans le système de communication, ainsi qu'au sein du relais RL 100 (*e.g.* au moment de leur fabrication). En variante de réalisation, les temps Δ4 et Δ5 sont pré-renseignés au sein du relais RL 100 (*e.g.* au moment de sa fabrication) et le relais RL 100 informe des valeurs des temps Δ4 et/ou Δ5 au sein de balises transmises par ledit relais RL 100. Ces balises sont introduites ci-après en relation avec la Fig. 3E.

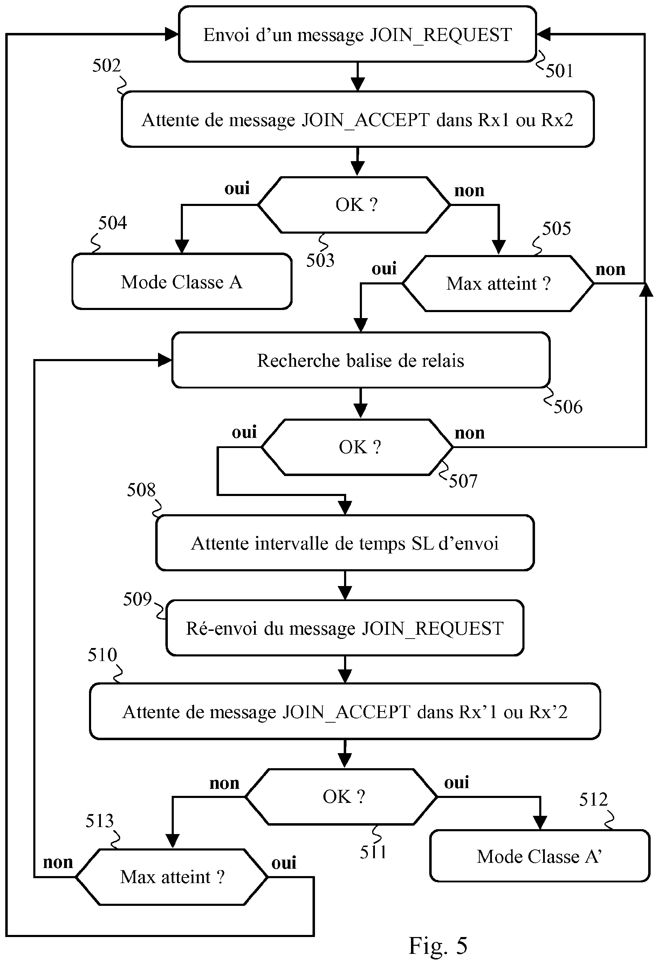

La **Fig. 3E** illustre schématiquement un séquencement de communications, appliqué lorsqu'un terminal EP souhaite s'appuyer sur le relais RL 100 pour communiquer avec l'équipement serveur SERV 130. En effet, les séquencements de communication illustrés aux Figs. 3A et 3B sont initiés par un envoi, de manière asynchrone, respectivement d'un message JOIN_REQUEST ou MSG par le terminal EP en question (ou par le relais RL 100 lorsque ledit relais RL 100 communique avec l'équipement serveur SERV 130 via une ou plusieurs passerelles GW). L'asynchronisme de l'initiation de ces séquencements ne pose pas de difficulté particulière, car les passerelles GW sont conçues pour être alimentées en permanence et peuvent donc être constamment prêtes à écouter le medium dans le cadre des communications de type LPWAN. Pour permettre au relais RL 100 de se mettre en veille, un certain synchronisme est introduit. Ainsi, le relais RL 100 émet de manière régulière des balises B. L'émission de ces balises B s'effectue en même temps que l'émission de balises par les passerelles GW dans le cadre des communications de type LPWAN. En effet, les passerelles GW sont synchronisées entre elles et sont configurées pour transmettre simultanément des balises, qui donnent une référence temporelle aux équipements (*e.g*. terminaux EP) qui les écoutent. Ainsi, le relais RL 100 peut s'appuyer sur les balises émises par une ou plusieurs passerelles GW pour se synchroniser au système de communication. En émettant lui-même les balises B, le relais RL 100 permet aussi à des terminaux EP en dehors de la portée radio effective des passerelles GW d'être synchronisés avec le reste du système de communication. Les balises B émises par le relais RL 100 incluent une information indiquant que lesdites balises B ont été émises par un relais RL, de sorte à permettre à un terminal EP recevant lesdites balises de savoir qu'elles n'ont pas été transmises par une passerelle GW. Cela permet audit terminal EP de savoir quel mode de communication utiliser entre Classe A et Classe A', comme décrit ci-après en relation avec les Figs. 5 et 6.

Les balises B ont ainsi le même format que celles émises par les passerelles GW. En s'appuyant sur le protocole de transmission de données de type LoRaWAN (marque déposée), les balises B peuvent se distinguer de celles émises par les passerelles GW, en utilisant une valeur spécifique (*e.g.* la valeur « 3 ») dans le sous-champ *Infodesc* du champ *GwSpecific.*

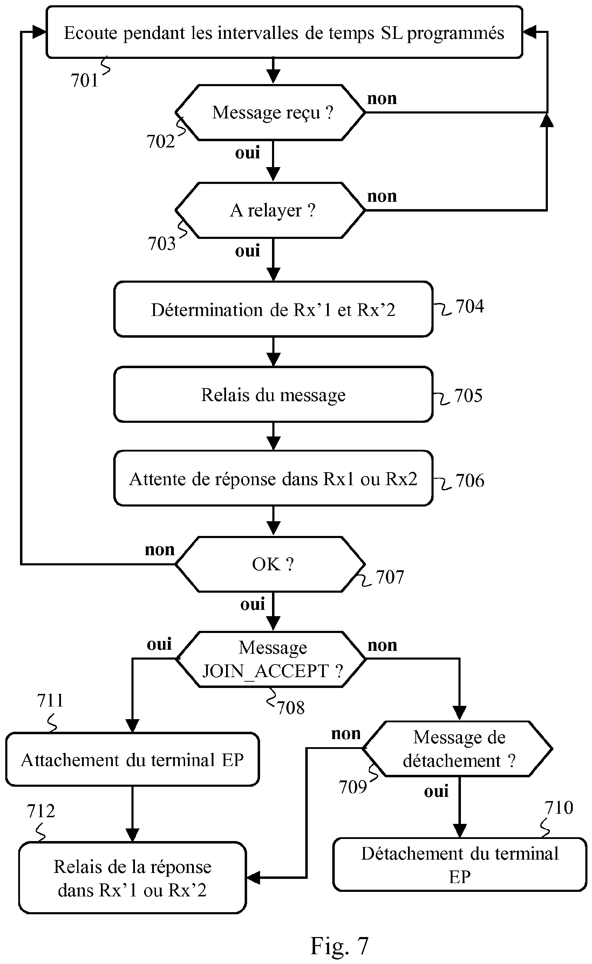

Le temps entre deux émissions successives de balises B, que l'on appelle *cycle,* est découpé en intervalles de temps SL séparés par des intervalles de garde de durée prédéfinie, comme montré sur la Fig. 3E où *x*+*1* intervalles de temps de SL0 à SLx sont représentés. Les intervalles de temps SL sont de durée prédéfinie connue des terminaux EP, du relais RL 100 et des passerelles GW (*e.g.* au moment de leur fabrication). Les intervalles de temps SL débutent et se terminent à des instants déductibles relativement aux balises B. Chaque balise B inclut des informations indiquant quels intervalles de temps peuvent être utilisés par les terminaux EP pour s'appuyer sur le relais RL 100 afin de communiquer avec l'équipement serveur SERV 130. Il est possible qu'un seul intervalle de temps SL soit autorisé à être utilisé par cycle par les terminaux EP pour s'appuyer sur le relais RL 100 afin de communiquer avec l'équipement serveur SERV 130. Les intervalles de temps SL indiqués dans les balises B sont donc des intervalles de temps SL pendant lesquels le relais RL 100 est configuré pour écouter le médium, et donc pendant lesquels les messages JOIN_REQUEST et les messages de service MSG qui doivent être relayés par le relais RL 100 doivent être transmis par les terminaux EP concernés. Cet aspect est détaillé ci-après en relation avec la Fig. 7. Les balises B peuvent en outre inclure une information indiquant quel débit de données DR (« Data Rate » en anglais) est applicable dans chaque intervalle de temps SL indiqué dans lesdites balises B.

Dans un mode de réalisation particulier dans lequel le relais RL 100 n'est pas en mesure d'écouter le medium en même temps que de transmettre via ledit médium, le relais RL 100 annule la transmission de balise B pour certains cycles. Cela permet au relais RL 100 d'écouter le medium à la recherche d'une balise émise par une passerelle GW du système de communication, d'en déterminer l'instant d'émission et de se maintenir synchronisé avec le reste du système de communication.

Les séquencements de communications montrés sur les Figs. 3C, 3D et 3E définissent ainsi le mode de communication en Classe A' déjà évoqué. Une quantité différente de fenêtres de réception peut être utilisée, dès lors que le mode de communication en Classe A' double (décalage dans le temps (temps Δ4 et Δ5)) la quantité de fenêtres de réception utilisée pour le mode de communication en Classe A.

Le fait de maintenir l'existence des première Rx1 et seconde Rx2 fenêtres de réception dans le cadre des Figs. 3C et 3D permet d'éviter des opérations de signalisation. En effet, si un terminal EP qui utilise le mode de communication en Classe A' reçoit un message de réponse dans la première fenêtre de réception Rx1 ou dans la seconde fenêtre de réception Rx2, c'est que ledit terminal EP est désormais à portée radio d'une passerelle GW du système de communication. Le terminal EP en question peut alors interpréter la réception dudit message de réponse dans la première fenêtre de réception Rx1 ou dans la seconde fenêtre de réception Rx2 comme étant une instruction de l'équipement serveur SERV 130 de basculer en mode de communication en Classe A.

La **Fig. 4** illustre schématiquement un algorithme, implémenté par chaque relais RL du système de communication, d'initialisation dudit relais RL. Considérons à titre illustratif que l'algorithme de la Fig. 4 est implémenté par le relais RL 100.

Dans une étape 401, le relais RL 100 est à l'écoute de balises transmises par une ou plusieurs passerelles GW. Lorsque le relais RL 100 reçoit de telles balises, le relais RL 100 est capable de se synchroniser au sein du système de communication. Le relais RL 100 est alors capable de déterminer où sont placées les fenêtres de réception Rx1 et Rx2 qui feraient suite à un envoi de message de sa part à destination de l'équipement serveur SERV 130.

Dans une étape 402, le relais RL 100 transmet un message JOIN_REQUEST à destination de l'équipement serveur SERV 130. Le mode de transmission en Classe A est utilisé, comme déjà décrit en relation avec la Fig. 3A. Le relais RL 100 accède au medium de communication après avoir préférentiellement attendu que soit écoulée une durée aléatoire (bornée). Ce message JOIN_REQUEST est capté par au moins une passerelle GW dont le relais RL 100 reçoit des balises, et est propagé par cette ou ces passerelles GW à l'équipement serveur SERV 130. Ce message JOIN_REQUEST est traité par l'équipement serveur SERV 130 comme décrit ci-après en relation avec la Fig. 8.

Dans une étape 403, le relais RL 100 se met en attente d'un message JOIN_ACCEPT dans les fenêtres de réception Rx1 et Rx2. A moins d'un traitement prédéfini à exécuter, le relais RL 100 se met en veille jusqu'à l'occurrence de la première fenêtre de réception Rx1, et si aucun message JOIN_ACCEPT ne lui est adressé dans la première fenêtre de réception Rx1, le relais RL 100 se met en veille jusqu'à l'occurrence de la seconde fenêtre de réception Rx2.

Dans une étape 404, le relais RL 100 vérifie si un message JOIN_ACCEPT lui a été adressé dans la première fenêtre de réception Rx1 ou dans la seconde fenêtre de réception Rx2. Si tel est le cas, une étape 407 est effectuée ; sinon, une étape 405 est effectuée.

Dans l'étape 405, le relais RL 100 vérifie si un quota maximum d'envois de messages JOIN_REQUEST a été atteint sans qu'il n'y ait eu de message JOIN_ACCEPT en réponse. Si tel est le cas, une étape 406 est effectuée ; sinon, l'étape 402 est réitérée.

Dans l'étape 406, une alarme est générée, de sorte à signifier à un installateur que l'initialisation du relais RL 100 a échoué, et il est mis fin à l'algorithme de la Fig. 4.

Dans l'étape 407, le relais RL 100 envoie un message de récupération de paramètres de balises, à destination de l'équipement serveur SERV 130. Le mode de transmission en Classe A est utilisé, comme déjà décrit en relation avec la Fig. 3B. Le relais RL 100 accède au medium de communication après avoir préférentiellement attendu que soit écoulée une durée aléatoire (bornée). Les paramètres que le relais RL 100 cherche à obtenir auprès de l'équipement serveur SERV 100 sont destinés à être utilisés par le relais RL 100 pour construire les balises B mentionnées en relation avec la Fig. 3E. Ces paramètres pourraient être prédéfinis, *e.g.* par configuration par l'installateur ou en usine, auquel cas le relais RL 100 n'a pas à les récupérer auprès de l'équipement serveur SERV 130. Ce message de récupération de paramètres de balises est traité par l'équipement serveur SERV 130 comme décrit ci-après en relation avec la Fig. 8.

Dans une étape 408, le relais RL 100 se met en attente d'un message de réponse dans les fenêtres de réception Rx1 et Rx2. A moins d'un traitement prédéfini à exécuter, le relais RL 100 se met en veille jusqu'à l'occurrence de la première fenêtre de réception Rx1, et si aucun message de réponse ne lui est adressé dans la première fenêtre de réception Rx1, le relais RL 100 se met en veille jusqu'à l'occurrence de la seconde fenêtre de réception Rx2.

Dans une étape 409, le relais RL 100 vérifie si un message de réponse lui a été adressé dans la première fenêtre de réception Rx1 ou dans la seconde fenêtre de réception Rx2. Si tel est le cas, une étape 411 est effectuée ; sinon, une étape 410 est effectuée.

Dans l'étape 410, le relais RL 100 vérifie si un quota maximum d'envois de messages de récupération de paramètres de balises a été atteint sans qu'il n'y ait eu de message de réponse en retour. Si tel est le cas, l'étape 406 est effectuée ; sinon, l'étape 407 est réitérée.

Dans l'étape 411, le relais RL 100 active les envois réguliers des balises B. Les balises B indiquent qu'elles sont transmises par un relais RL et identifient en outre, en accord avec les paramètres récupérés auprès de l'équipement serveur SERV 130, quels sont les intervalles de temps SL qui peuvent être utilisés par tout terminal EP pour s'appuyer sur le relais RL 100 afin de communiquer avec l'équipement serveur SERV 130. Le relais RL 100 programme aussi des périodes de réveil correspondant auxdits intervalles de temps SL pendant lesquels le relais RL 100 se met à l'écoute du medium pour capter un éventuel message que le relais RL 100 aurait à relayer à destination de l'équipement serveur SERV 130. D'autres paramètres peuvent avoir été communiqués par l'équipement serveur SERV 130 dans ledit message de réponse, et le relais RL 100 les utilise dans le cadre de la programmation des envois réguliers des balises B et/ou des périodes de réveil correspondant auxdits intervalles de temps SL. Il est ensuite mis fin à l'algorithme de la Fig. 4.

Il est apparent à la lecture de l'algorithme de la Fig. 4 et des séquencements de communications des Figs. 3A à 3E, que le relais RL 100 est un dispositif prêt-à-l'emploi (« plug and play » en anglais). En effet, il suffit d'insérer le relais RL 100 dans le système de communication déjà constitué de l'équipement serveur SERV 130 et d'au moins une passerelle GW 120 à portée radio dudit relais RL 100 pour que ledit relais RL 100 puisse prendre en charge des terminaux EP et ainsi étendre la portée radio du système de communication.

La **Fig. 5** illustre schématiquement un algorithme, implémenté par tout terminal EP ayant conscience de la potentielle présence d'au moins un relais RL au sein du système de communication, d'exécution d'une procédure d'enregistrement dudit terminal EP auprès de l'équipement serveur SERV 130. Considérons à titre illustratif que l'algorithme de la Fig. 5 est exécuté par le terminal EP 110.

Dans une étape 501, le terminal EP 110 transmet un message JOIN_REQUEST à destination de l'équipement serveur SERV 130. Par défaut, le mode de transmission en Classe A est utilisé, comme déjà décrit en relation avec la Fig. 3A. Le terminal EP 110 accède au medium de communication après avoir préférentiellement attendu que soit écoulée une durée aléatoire (bornée).

Dans une étape 502, le terminal EP 110 se met en attente d'un message JOIN_ACCEPT dans les fenêtres de réception Rx1 et Rx2. A moins d'un traitement prédéfini à exécuter, le terminal EP 110 se met en veille jusqu'à l'occurrence de la première fenêtre de réception Rx1, et si aucun message JOIN_ACCEPT ne lui est adressé dans la première fenêtre de réception Rx1, le terminal EP 110 se met en veille jusqu'à l'occurrence de la seconde fenêtre de réception Rx2.

Dans une étape 503, le terminal EP 110 vérifie si un message JOIN_ACCEPT lui a été adressé dans la première fenêtre de réception Rx1 ou dans la seconde fenêtre de réception Rx2. Si tel est le cas, cela signifie que le terminal EP 110 est à portée radio d'au moins une passerelle GW, et une étape 504 est effectuée ; sinon, une étape 505 est effectuée.

Dans l'étape 504, le terminal EP 110 traite le message JOIN_ACCEPT et se configure pour utiliser le mode de transmission en Classe A pour les communications à venir, *i.e.* dans le cadre de l'algorithme de la Fig. 6. Il est alors mis fin à l'algorithme de la Fig. 5.

Dans l'étape 505, le terminal EP 110 vérifie si un quota maximum d'envois de messages JOIN_REQUEST, en mode de transmission en Classe A, a été atteint sans qu'il n'y ait eu de message JOIN_ACCEPT en réponse. Si tel est le cas, une étape 506 est effectuée ; sinon, l'étape 501 est réitérée.

Dans l'étape 506, le terminal EP 110 se met à la recherche d'une balise qui serait émise par un relais RL, comme le relais RL 100. Le terminal EP 110 se met à l'écoute du medium pour une durée au moins égale à la durée d'un cycle - *i.e.* temps entre deux balises successives (128 secondes selon le protocole de transmission de données de type LoRaWAN (marque déposée)).

Dans une étape 507, le terminal EP 110 vérifie si au moins une balise B a été détectée par ledit terminal EP 110. Pour rappel, les balises B contiennent une information indiquant que lesdites balises sont émises par un relais RL et non par une passerelle GW. Si tel est le cas, une étape 508 est effectuée ; sinon, l'étape 501 est réitérée, après avoir préférentiellement attendu que soit écoulée une durée prédéfinie (pendant laquelle le terminal EP 110 peut se mettre en veille).

Dans l'étape 508, le terminal EP 110 se met en attente de l'occurrence d'un intervalle de temps SL indiqué, dans la balise reçue, comme étant autorisé pour transmettre un message à l'équipement serveur SERV 130 en s'appuyant sur le relais RL ayant émis ladite balise. A moins d'un traitement prédéfini à exécuter, le terminal EP 110 se met en veille jusqu'à l'occurrence dudit intervalle de temps SL.

Dans l'étape 509, le terminal EP 110 renvoie le message JOIN_REQUEST pendant ledit intervalle de temps SL. Le terminal EP 110 utilise alors le mode de transmission en Classe A'.

Dans une étape 510, le terminal EP 110 se met en attente d'un message JOIN_ACCEPT dans les fenêtres de réception Rx1 et Rx2, et surtout dans les fenêtres de réception Rx'1 et Rx'2. En effet, à ce stade, les fenêtres de réception Rx1 et Rx2 sont dispensables, car aucune passerelle GW n'a *a priori* reçu le message JOIN_REQUEST transmis à la précédente exécution de l'étape 501. A moins d'un traitement prédéfini à exécuter, le terminal EP 110 se met en veille jusqu'à l'occurrence de la première fenêtre de réception Rx1 ; si aucun message JOIN_ACCEPT ne lui est adressé dans la première fenêtre de réception Rx1, le terminal EP 110 se met en veille jusqu'à l'occurrence de la seconde fenêtre de réception Rx2 ; si aucun message JOIN_ACCEPT ne lui est adressé dans la seconde fenêtre de réception Rx2, le terminal EP 110 se met en veille jusqu'à l'occurrence de la troisième fenêtre de réception Rx'1 ; et si aucun message JOIN_ACCEPT ne lui est adressé dans la troisième fenêtre de réception Rx'1, le terminal EP 110 se met en veille jusqu'à l'occurrence de la quatrième fenêtre de réception Rx'2.

Dans une étape 511, le terminal EP 110 vérifie si un message JOINACCEPT lui a été adressé dans la troisième fenêtre de réception Rx'1 ou dans la quatrième fenêtre de réception Rx'2. Il est considéré ici qu'aucune passerelle GW n'est actuellement à portée radio du terminal EP 110, mais si le terminal EP 110 venait à recevoir un message JOIN_ACCEPT dans la première fenêtre de réception Rx1 ou dans la seconde fenêtre de réception Rx2, alors l'étape 504 serait effectuée (non représenté sur la Fig. 5). Si un message JOIN_ACCEPT lui a été adressé dans la troisième fenêtre de réception Rx'1 ou dans la quatrième fenêtre de réception Rx'2, une étape 512 est effectuée ; sinon, une étape 513 est effectuée.

Dans l'étape 512, le terminal EP 110 traite le message JOIN_ACCEPT et se configure pour utiliser le mode de transmission en Classe A' pour les communications à venir, *i.e.* dans le cadre de l'algorithme de la Fig. 6. Il est alors mis fin à l'algorithme de la Fig. 5.

Dans l'étape 513, le terminal EP 110 vérifie si un quota maximum d'envois de messages JOIN_REQUEST a été atteint, en mode de transmission en Classe A', sans qu'il n'y ait eu de message JOIN_ACCEPT en réponse. Si tel est le cas, l'étape 501 est réitérée ; sinon, l'étape 506 est réitérée.

La **Fig. 6** illustre schématiquement un algorithme, implémenté par tout terminal EP ayant conscience de la potentielle présence d'au moins un relais RL au sein du système de communication, de transmission de données à l'équipement serveur SERV 130, après enregistrement dudit terminal EP auprès de l'équipement serveur SERV 130. Considérons à titre illustratif que l'algorithme de la Fig. 5 est exécuté par le terminal EP 110.

Dans une étape 601, le terminal EP 110 détecte que des données détenues par ledit terminal EP 110 sont à transmettre à l'équipement serveur SERV 130. Par exemple, le terminal EP 110 intègre un capteur (*e.g.* de consommation d'eau ou de gaz) et lesdites données sont des données de mesure collectées par ledit capteur.

Dans une étape 602, le terminal EP 110 détermine si ledit terminal EP 110 est configuré en mode de transmission en Classe A ou si ledit terminal EP 110 est configuré en mode de transmission en Classe A'. Si le terminal EP 110 est configuré en mode de transmission en Classe A, une étape 603 est effectuée ; sinon, une étape 609 est effectuée.

Dans l'étape 603, le terminal EP 110 transmet, à destination de l'équipement serveur SERV 130, un message de service MSG incluant lesdites données. Le mode de transmission en Classe A est utilisé, comme déjà décrit en relation avec la Fig. 3B. Le terminal EP 110 accède au medium de communication après avoir préférentiellement attendu que soit écoulée une durée aléatoire (bornée).

Dans une étape 604, le terminal EP 110 se met en attente d'un message de réponse dans les fenêtres de réception Rx1 et Rx2. A moins d'un traitement prédéfini à exécuter, le terminal EP 110 se met en veille jusqu'à l'occurrence de la première fenêtre de réception Rx1, et si aucun message de réponse ne lui est adressé dans la première fenêtre de réception Rx1, le terminal EP 110 se met en veille jusqu'à l'occurrence de la seconde fenêtre de réception Rx2.

Dans une étape 605, le terminal EP 110 vérifie si un message de réponse lui a été adressé dans la première fenêtre de réception Rx1 ou dans la seconde fenêtre de réception Rx2. Si tel est le cas, une étape 606 est effectuée ; sinon, une étape 607 est effectuée.

Dans l'étape 606, le terminal EP 110 traite le message de réponse, et il est alors mis fin à l'algorithme de la Fig. 6.

Dans l'étape 607, le terminal EP 110 vérifie si un quota maximum d'envois du message de service MSG a été atteint sans qu'il n'y ait eu de message de réponse en retour. Si tel est le cas, une étape 608 est effectuée ; sinon, l'étape 603 est réitérée.

Dans l'étape 608, le terminal EP 110 effectue une nouvelle procédure d'enregistrement, *i.e*. exécute à nouveau l'algorithme de la Fig. 5. Il est alors mis fin à l'algorithme de la Fig. 6.

Dans l'étape 609, le terminal EP 110 se met en attente d'une balise qui serait émise par un relais RL et plus particulièrement par le relais RL via lequel le terminal EP 110 s'est enregistré auprès de l'équipement serveur SERV 130 (voir l'algorithme de la Fig. 5). Cela permet au terminal EP 110 d'assurer qu'il reste synchronisé avec le reste du système de communication, étant donné que le terminal EP 110 peut être resté en veille pendant de nombreuses heures, ce qui peut avoir engendré un certain décalage temporel entre son horloge interne et la diffusion effective des balises au sein du système de communication. Mais si l'horloge interne du terminal EP 110 est considérée comme fiable, le terminal EP 110 peut éviter de mettre en œuvre l'étape 609 à chaque exécution de l'algorithme de la Fig. 6 et passer directement à une étape 610.

Dans l'étape 610, le terminal EP 110 se met en attente de l'occurrence d'un intervalle de temps SL indiqué, dans la balise reçue, comme étant autorisé pour transmettre un message à l'équipement serveur SERV 130 en s'appuyant sur le relais RL ayant émis ladite balise. A moins d'un traitement prédéfini à exécuter, le terminal EP 110 se met en veille jusqu'à l'occurrence dudit intervalle de temps SL.

Dans une étape 611, le terminal EP 110 transmet pendant ledit intervalle de temps SL, à destination de l'équipement serveur SERV 130, un message de service MSG incluant lesdites données. Le mode de transmission en Classe A' est utilisé, comme déjà décrit en relation avec les Figs. 3D et 3E.

Dans une étape 612, le terminal EP 110 se met en attente d'un message de réponse dans les fenêtres de réception Rx1 et Rx2. Même si le terminal EP 110 passe actuellement par un relais RL pour communiquer avec l'équipement serveur SERV 130, il est possible que le terminal EP 110 soit désormais à portée radio d'une passerelle GW, auquel cas ladite passerelle GW aurait aussi propagé jusqu'à l'équipement serveur SERV 130 le message de service MSG directement reçu du terminal EP 110. A moins d'un traitement prédéfini à exécuter, le terminal EP 110 se met en veille jusqu'à l'occurrence de la première fenêtre de réception Rx1, et si aucun message de réponse ne lui est adressé dans la première fenêtre de réception Rx1, le terminal EP 110 se met en veille jusqu'à l'occurrence de la seconde fenêtre de réception Rx2.

Dans une étape 613, le terminal EP 110 vérifie si un message de réponse lui a été adressé dans la première fenêtre de réception Rx1 ou dans la seconde fenêtre de réception Rx2. Si tel est le cas, une étape 614 est effectuée ; sinon, une étape 615 est effectuée.

Dans l'étape 614, le terminal EP 110 traite le message de réponse, et se configure pour utiliser le mode de transmission en Classe A pour la prochaine communication à destination de l'équipement serveur SERV 130, *i.e.* dans le cadre de la prochaine exécution de l'algorithme de la Fig. 6. Il est alors ensuite mis fin à l'algorithme de la Fig. 6.

Dans l'étape 615, le terminal EP 110 se met en attente d'un message de réponse dans les fenêtres de réception Rx'1 et Rx'2. A moins d'un traitement prédéfini à exécuter, le terminal EP 110 se met en veille jusqu'à l'occurrence de la troisième fenêtre de réception Rx'1, et si aucun message de réponse ne lui est adressé dans la troisième fenêtre de réception Rx'1, le terminal EP 110 se met en veille jusqu'à l'occurrence de la quatrième fenêtre de réception Rx'2.

Dans une étape 616, le terminal EP 110 vérifie si un message de réponse lui a été adressé dans la troisième fenêtre de réception Rx'1 ou dans la quatrième fenêtre de réception Rx'2. Si tel est le cas, une étape 618 est effectuée ; sinon, une étape 617 est effectuée.

Dans l'étape 617, le terminal EP 110 vérifie si le quota maximum d'envois du message de service MSG a été atteint sans qu'il n'y ait eu de message de réponse en retour. Si tel est le cas, l'étape 608 est effectuée ; sinon, l'étape 609 est réitérée. Le terminal EP 110 peut aussi retenter d'envoyer son message de service MSG en utilisant un autre intervalle de temps SL, dans lequel le relais RL en question est supposé être à l'écoute du médium, dans le même cycle - *i.e.* avant la prochaine diffusion de balises au sein du système de communication. L'étape 610 est alors directement exécutée.

Dans l'étape 618, le terminal EP 110 traite le message de réponse, et il est alors mis fin à l'algorithme de la Fig. 6.

La **Fig. 7** illustre schématiquement un algorithme, implémenté par tout relais RL, de propagation à destination de l'équipement serveur SERV 130 de données reçues de la part d'un terminal EP. Considérons à titre illustratif que l'algorithme de la Fig. 7 est implémenté par le relais RL 100.

Dans une étape 701, le relais RL 100 est à l'écoute du medium pendant les intervalles de temps SL programmés à l'étape 411. Ce sont les intervalles de temps SL indiqués dans les balises B émises de manière cyclique par le relais RL 100.

Dans une étape 702, le relais RL 100 vérifie si un message en provenance d'un terminal EP a été reçu pendant lesdits intervalles de temps SL. Si tel est le cas, une étape 703 est effectuée ; sinon, l'étape 701 est réitérée, en se mettant en veille autant que possible.

Dans l'étape 703, le relais RL 100 vérifie si le message reçu doit être relayé par le relais RL 100. Si le message reçu est un message JOIN_REQUEST, ledit message doit être relayé par le relais RL 100 à destination de l'équipement serveur SERV 130, indépendamment du terminal EP ayant transmis ledit message. Si le message reçu est un autre message, ledit message doit être relayé par le relais RL 100 à destination de l'équipement serveur SERV 130 seulement si ledit message a été émis par un terminal EP dont le relais RL 100 est en charge, c'est-à-dire si le terminal EP est inscrit dans une liste L d'identification des terminaux EP qui lui sont rattachés, c'est-à-dire dont les messages de service sont à relayer par le relais RL 100 (voir une étape 711 décrite ci-après). Si le message reçu doit être relayé par le relais RL 100, une étape 704 est effectuée ; sinon, l'étape 701 est réitérée, en se mettant en veille autant que possible.

Dans l'étape 704, le relais RL 100 détermine à quels instants sont définies les troisième Rx'1 et quatrième Rx'2 fenêtres de réception, à compter de la réception dudit message. Le relais RL 100 détermine donc dans quelles fenêtres temporelles ledit relais RL 100 a la possibilité de répondre au message reçu.

Dans une étape 705, le relais RL 100 relaie le message reçu, à destination de l'équipement serveur SERV 130. Pour ce faire, le relais RL 100 encapsule le message reçu dans un message de service que le relais RL 100 envoie en son nom à l'équipement serveur SERV 130. Le relais RL 100 étant vu comme un terminal EP du point de vue des passerelles GW, cette encapsulation permet de rendre transparente la présence du relais RL 100 vis-à-vis des passerelles GW. Le relais RL 100 utilise le mode de transmission en Classe A, les passerelles GW étant en permanence à l'écoute du médium. Ce message de service envoyé par le relais RL 100 est traité au niveau de l'équipement serveur SERV 130 comme décrit ci-après en relation avec les Figs. 9 et 10. Dans un mode de réalisation particulier, ce message de service inclut une information de niveau de qualité de signal en réception dudit message, plus particulièrement pour ce qui concerne les messages JOIN_REQUEST. Cela peut aider l'équipement serveur SERV 130 à décider à quel relais RL confier la charge du terminal EP en question lorsqu'un même message JOIN_REQUEST est relayé par plusieurs relais RL (ce qui suppose que lesdits relais RL indiquent au moins un intervalle de temps SL en commun dans leurs balises respectives) pour le compte dudit terminal EP.

Dans une étape 706, le relais RL 100 se met en attente d'un message de réponse dans les fenêtres de réception Rx1 et Rx2, comme décrit en relation avec la Fig. 3B. A moins d'un traitement prédéfini à exécuter, le relais RL 100 se met en veille jusqu'à l'occurrence de la première fenêtre de réception Rx1, et si aucun message de réponse ne lui est adressé dans la première fenêtre de réception Rx1, le relais RL 100 se met en veille jusqu'à l'occurrence de la seconde fenêtre de réception Rx2. Bien noter qu'ici les première Rx1 et seconde Rx2 fenêtres de réception sont définies par rapport au message de service envoyé par le relais RL 100 à destination de l'équipement serveur SERV 130 , et qu'il ne doit pas y avoir de confusion avec les première Rx1 et seconde Rx2 fenêtres de réception définies par rapport au message originellement envoyé par le terminal EP (et que le relais RL 100 relaie dans son message de service).

Dans une étape 707, le relais RL 100 vérifie si un message de réponse lui a été adressé dans la première fenêtre de réception Rx1 ou dans la seconde fenêtre de réception Rx2. Si tel est le cas, une étape 708 est effectuée ; sinon, cela signifie que le terminal EP en question n'aura *a priori* pas de réponse au message que ledit terminal EP avait envoyé et que le relais RL 100 avait relayé, et l'étape 701 est réitérée, en se mettant en veille autant que possible.

Dans une étape 708, le relais RL 100 des-encapsule le message de réponse reçu et vérifie si le message de réponse reçu encapsule un message JOIN_ACCEPT (en vérifiant préférentiellement en outre que le message JOIN_ACCEPT correspond bien à un message JOIN_REQUEST précédemment relayé). Si tel est le cas, une étape 711 est effectuée ; sinon, une étape 709 est effectuée.

Dans l'étape 709, le relais RL 100 vérifie si le message de réponse reçu est un message de détachement DETACH. Un message de détachement est un message qui instruit le relais RL 100 de ne plus relayer les messages de services en provenance du terminal EP en question. Ce cas de figure survient lorsque ledit terminal EP est désormais à portée radio d'une ou plusieurs passerelles GW, tel que décrit ci-après en relation avec la Fig. 10. Si le message de réponse reçu est un message de détachement DETACH, une étape 710 est effectuée ; sinon, une étape 712 est effectuée.

Dans l'étape 710, le relais RL 100 supprime le terminal EP (son identifiant DevAddr qui lui a été alloué par l'équipement serveur SERV 130) de la liste L d'identification des terminaux EP qui lui sont rattachés. Il est ensuite mis fin à l'algorithme de la Fig. 7.

Dans l'étape 711, le relais RL 100 enregistre dans une mémoire locale un identifiant DevAddr du terminal EP contenu dans le message JOIN_ACCEPT. Cet identifiant DevAddr du terminal EP est alloué par l'équipement serveur SERV 130 suite à la réception du message JOIN_REQUEST auquel ledit message JOIN_ACCEPT fait suite. Cet identifiant DevAddr du terminal EP enrichit la liste L d'identification des terminaux EP qui lui sont rattachés. Le relais RL 100 interprète donc la réception de ce message JOIN_ACCEPT comme étant une instruction implicite de rattachement dudit terminal EP au relais RL 100. Des variantes à cette approche sont décrites ci-après en relation avec une étape 906. L'étape 712 est ensuite effectuée.

Dans l'étape 712, le relais RL 100 propage le message JOIN_ACCEPT dans la troisième fenêtre de réception Rx'1 ou dans la quatrième fenêtre de réception Rx'2 définies par exécution de l'étape 704, c'est-à-dire les troisième Rx'1 et quatrième Rx'2 fenêtres de réception définies à partir de l'envoi du message originel par le terminal EP en question. Il est ensuite mis fin à l'algorithme de la Fig. 7.

La **Fig. 8** illustre schématiquement un algorithme, implémenté par l'équipement serveur SERV 130, pour enregistrer tout relais RL au sein du système de communication (en correspondance avec la Fig. 4). L'algorithme de la Fig. 8 est préférentiellement exécuté par le serveur LNS 131.

Dans une étape 801, l'équipement serveur SERV 130 reçoit un message JOIN_REQUEST en provenance d'un relais RL, tel que le relais RL 100. A moins que l'équipement serveur SERV 130 ait connaissance des identifiants uniques EUI (« Extended Unique Identifier » en anglais) de tous les relais RL susceptibles d'être inclus dans le système de communication, l'équipement serveur SERV 130 ne sait pas encore que le message JOIN_REQUEST est en provenance d'un relais RL.

Dans une étape 802, l'équipement serveur SERV 130 traite le message JOIN_REQUEST et alloue au relais RL en question un identifiant DevAddr. L'équipement serveur SERV 130 envoie, en réponse au message JOIN_REQUEST, un message JOIN_ACCEPT incluant l'identifiant DevAddr alloué au relais RL en question. L'équipement serveur SERV 130 sélectionne une passerelle GW parmi celles (s'il y en a plusieurs) qui lui ont propagé le message JOIN_REQUEST. Typiquement l'équipement serveur SERV 130 sélectionne une passerelle GW ayant indiqué le meilleur niveau de qualité de signal en réception dudit message JOIN_REQUEST. La passerelle GW ainsi sélectionnée est donc en charge de répondre au relais RL en question, en utilisant la première Rx1 ou la seconde Rx2 fenêtre de réception, qui ont été définies par l'envoi du message JOIN_REQUEST par le relais RL en question (conformément à la Fig. 3A).

Si l'équipement serveur SERV 130 reçoit un message JOIN_REQUEST pour un relais RL déjà enregistré, l'équipement serveur SERV 130 annule le précédent enregistrement dudit relais RL (cela signifie que ledit relais RL avait perdu la connexion au système de communication et a initié une nouvelle procédure d'enregistrement).

Dans une étape 803, l'équipement serveur SERV 130 reçoit un message de service MSG en provenance du relais RL en question. Ce message de service est un message de récupération de paramètres de balises (tel que déjà évoqué en relation avec la Fig. 4). L'équipement serveur SERV 130 sait alors qu'il a affaire à un relais RL.

Dans une étape 804, l'équipement serveur SERV 130 enregistre l'identifiant unique EUI du relais RL en question, l'identifiant DevAddr qui lui a été alloué, et indique en correspondance que le dispositif concerné est un relais RL.

Dans le mode de réalisation particulier susmentionné de l'équipement serveur SERV 130, le serveur LNS 131 informe l'application de relais RLA 132, en charge dudit relais RL, de la présence dudit relais RL au sein du système de communication. Ladite application de relais RLA 132 est alors apte à effectuer des encapsulations et des-encapsulations pour permettre audit relais RL de jouer son rôle de relais. Dans le cas où plusieurs applications de relais RLA 132 existent au sein de l'équipement serveur SERV 130, le serveur LNS 131 garde trace d'une information indiquant auprès de quelle application de relais RLA 132 ledit relais RL a été déclaré.

Dans une étape 805, l'équipement serveur SERV 130 détermine quels intervalles de temps SL devront être utilisés par le relais RL en question pour recevoir des messages en provenance de terminaux EP qui lui seront éventuellement rattachés ultérieurement. Ce sont les intervalles de temps SL que le relais RL en question doit mentionner dans les balises B (voir l'étape 411). L'équipement serveur SERV 130 choisit ces intervalles de temps SL de la même manière que pour les communications en mode de transmission en Classe B implémenté par les passerelles GW dans le cadre du protocole de transmission de données de type LoRaWAN (marque déposée). D'autres paramètres peuvent être sélectionnés par l'équipement serveur SERV 130 pour l'envoi des balises B par le relais RL en question, comme par exemple les temps Δ4 et Δ5 mentionnés en relation avec les Figs. 3C et 3D.

Dans une étape 806, l'équipement serveur SERV 130 envoie, à destination du relais RL en question, un message de réponse incluant les paramètres déterminés à l'étape 805, plus particulièrement des informations représentatives desdits intervalles de temps SL. L'équipement serveur SERV 130 utilise une passerelle GW pour propager, jusqu'au relais RL en question, ledit message de réponse. Ladite passerelle GW utilise alors la première fenêtre de réception Rx1 ou la seconde fenêtre de réception Rx2 qui ont été définies par l'envoi, par ledit relais RL, dudit message de récupération de paramètres de balises (conformément à la Fig. 3B). Il est alors mis fin à l'algorithme de la Fig. 8.

La **Fig. 9** illustre schématiquement un algorithme, implémenté par l'équipement serveur SERV 130, pour traiter un message JOIN_REQUEST relayé par un relais RL du système de communication.

Dans une étape 901, l'équipement serveur SERV 130 reçoit le message JOIN_REQUEST relayé par un relais RL du système de communication. Ledit message JOIN_REQUEST a donc été encapsulé dans un message de service MSG par ledit relais RL. L'équipement serveur SERV 130 des-encapsule alors ledit message JOIN_REQUEST.

Dans le mode de réalisation particulier susmentionné de l'équipement serveur SERV 130, le message de service MSG est reçu par le serveur LNS 131, qui détecte que le message provient dudit relais RL grâce à l'identifiant, inclus dans ledit message de service MSG, qui correspond à l'identifiant alloué audit relais RL. Le serveur LNS 131 passe donc ledit message de service MSG à l'application de relais RLA 132 en charge dudit relais RL. Ladite application de relais RLA 132 des-encapsule ledit message JOIN_REQUEST pour le compte du serveur LNS 131.

Dans une étape 902, l'équipement serveur SERV 130 vérifie si ledit message JOIN_REQUEST a été reçu plusieurs fois, *i.e.* par plusieurs biais. Cela signifie que l'équipement serveur SERV 130 temporise le traitement dudit message JOIN_REQUEST le temps de pouvoir déterminer, en fonction de la latence maximum dans le système de communication, si ledit message JOIN_REQUEST est effectivement reçu ou pas par un autre biais. Si tel est le cas, une étape 903 est effectuée ; sinon, une étape 905 est effectuée.

Dans l'étape 903, l'équipement serveur SERV 130 vérifie si ledit message JOIN_REQUEST a aussi été reçu via au moins une passerelle GW. Si tel est le cas, une étape 907 est effectuée ; sinon, une étape 904 est effectuée.

Dans l'étape 904, l'équipement serveur SERV 130 sélectionne un relais RL parmi ceux qui ont relayé ledit message JOIN_REQUEST. Par exemple, chaque relais RL inclut, dans son message de service MSG servant à encapsuler ledit message JOIN_REQUEST, une information de niveau de qualité de signal en réception dudit message JOIN_REQUEST. L'équipement serveur SERV 130 sélectionne alors le relais RL présentant le meilleur niveau de qualité de signal en réception dudit message JOIN_REQUEST. Selon autre exemple, l'équipement serveur SERV 130 sélectionne le relais RL auquel la plus petite quantité de terminaux EP est rattachée parmi ceux ayant relayé ledit message JOIN_REQUEST. D'autres critères peuvent être utilisés, seuls ou en combinaison avec les exemples précités. Puis, l'étape 905 est effectuée.

Dans l'étape 905, l'équipement serveur SERV 130 alloue un identifiant DevAddr au terminal EP ayant transmis ledit message JOIN_REQUEST et enregistre que ledit terminal EP est rattaché audit relais RL. L'équipement serveur SERV 130 maintient donc, pour chaque relais RL une liste L' des terminaux EP qui sont rattachés audit relais RL, lesdits terminaux EP étant respectivement identifiés par leur identifiant unique EUI et par leur identifiant DevAddr. Si l'équipement serveur SERV 130 reçoit un message JOIN_REQUEST pour un terminal EP déjà rattaché à un relais RL, l'équipement serveur SERV 130 annule le précédent enregistrement dudit terminal EP (cela signifie que ledit terminal EP avait perdu la connexion au système de communication et a initié une nouvelle procédure d'enregistrement).

Dans l'étape 906, l'équipement serveur SERV 130 génère un message JOIN_ACCEPT destiné au terminal EP ayant transmis ledit message JOIN_REQUEST, le message JOINACCEPT incluant l'identifiant DevAddr alloué audit terminal EP. De plus, l'équipement serveur SERV 130 encapsule ledit message JOIN_ACCEPT dans un message de réponse au message de service MSG via lequel ledit message JOIN_REQUEST est parvenu à l'équipement serveur SERV 130. Cette réponse est adressée au relais RL auquel le terminal EP en question est rattaché. L'équipement serveur SERV 130 utilise une passerelle GW pour propager, jusqu'audit relais RL, ledit message de réponse au message de service MSG. Ladite passerelle GW utilise alors la première fenêtre de réception Rx1 ou la seconde fenêtre de réception Rx2 qui ont été définies par l'envoi, par ledit relais RL, dudit message de service MSG (conformément à la Fig. 3B). Il est alors mis fin à l'algorithme de la Fig. 9.

Dans le mode de réalisation particulier susmentionné de l'équipement serveur SERV 130, le serveur LNS 131 passe ledit message JOIN_ACCEPT à l'application de relais RLA 132 en charge dudit relais RL. Ladite application de relais RLA 132 encapsule ledit message JOIN_ACCEPT pour le compte du serveur LNS 131.

Il est considéré dans la description de l'étape 906 ci-dessus que ledit relais RL interprète la réception dudit message de réponse encapsulant le message JOIN_ACCEPT destiné audit terminal EP comme étant une instruction de rattachement dudit terminal EP audit relais RL. En variante, l'équipement serveur SERV 130 peut inclure dans ledit message de réponse encapsulant le message JOIN_ACCEPT une information indiquant explicitement audit relais RL que ledit terminal EP est désormais rattaché audit relais RL. Une autre variante consiste à ce que ledit relais RL transmette un autre message de service MSG en réponse à la réception dudit message JOINACCEPT encapsulé. Cet autre message de service MSG est donc un message de demande de confirmation de rattachement, et inclut l'identifiant DevAddr dudit terminal EP, pour que l'équipement serveur SERV 130 sache à quel terminal EP se réfère le relais RL en question. L'équipement serveur SERV 130 répond alors audit autre message de service MSG en confirmant, ou éventuellement en infirmant, le rattachement dudit terminal EP audit relais RL. Encore une autre variante est que, suite à la réception dudit message JOIN_ACCEPT encapsulé, ledit relais RL transmet régulièrement à l'équipement serveur SERV 130 un tel message de confirmation de rattachement. De la même manière, l'équipement serveur SERV 130 répond alors audit autre message de service MSG en confirmant, ou en infirmant, le rattachement dudit terminal EP audit relais RL. Cela permet d'assurer que l'équipement serveur SERV 130 et ledit relais RL sont en accord sur le fait que le terminal EP en question soit, ou non, rattaché audit relais RL. Si l'équipement serveur SERV 130 infirme le rattachement dudit terminal EP ou ne répond pas, le relais RL en question considère ne plus avoir à relayer les messages de service MSG issus dudit terminal EP et le supprime de sa liste L d'identification des terminaux EP qui lui sont rattachés.

Dans l'étape 907, l'équipement serveur SERV 130 génère un message JOIN_ACCEPT destiné au terminal EP ayant transmis ledit message JOIN_REQUEST, le message JOIN_ACCEPT incluant l'identifiant DevAddr alloué audit terminal EP. L'équipement serveur SERV 130 utilise une passerelle GW pour propager, jusqu'au terminal EP en question, ledit message JOIN_ACCEPT. Ladite passerelle GW utilise alors la première fenêtre de réception Rx1 ou la seconde fenêtre de réception Rx2 qui ont été définies par l'envoi, par ledit terminal EP, dudit message JOIN_REQUEST (conformément à la Fig. 3A). Il est alors mis fin à l'algorithme de la Fig. 9.

La **Fig. 10** illustre schématiquement un algorithme, implémenté par l'équipement serveur SERV 130, pour traiter un message de service MSG transmis par un terminal EP et relayé par un relais RL du système de communication.

Dans une étape 1001, l'équipement serveur SERV 130 reçoit le message de service MSG transmis par le terminal EP et relayé par ledit relais RL. Ledit message de service MSG a donc lui-même été encapsulé dans un autre message de service MSG par ledit relais RL. L'équipement serveur SERV 130 des-encapsule alors ledit message de service MSG transmis par un terminal EP.

Dans le mode de réalisation particulier susmentionné de l'équipement serveur SERV 130, ledit autre message de service MSG est reçu par le serveur LNS 131, qui détecte que le message provient dudit relais RL grâce à l'identifiant, inclus dans ledit autre message de service MSG, qui correspond à l'identifiant alloué audit relais RL. Le serveur LNS 131 passe donc ledit autre message de service MSG à l'application de relais RLA 132 en charge dudit relais RL. Ladite application de relais RLA 132 des-encapsule alors ledit message de service MSG transmis par un terminal EP, pour le compte du serveur LNS 131.

Dans une étape 1002, l'équipement serveur SERV 130 vérifie si ledit message de service MSG transmis par un terminal EP a aussi été reçu via au moins une passerelle GW. Si tel est le cas, cela signifie que le terminal EP est désormais à portée radio d'au moins une passerelle GW du système de communication, et une étape 1003 est effectuée ; sinon, une étape 1006 est effectuée.

Dans l'étape 1003, l'équipement serveur SERV 130 détache le terminal EP dudit relais RL. En d'autres termes, l'équipement serveur SERV 130 supprime l'identifiant unique EUI et l'identifiant DevAddr du terminal EP en question de la liste L' des terminaux EP rattachés audit relais RL.

Dans une étape 1004, l'équipement serveur SERV 130 génère un message de détachement dudit terminal EP, qui est destiné au relais RL. Ce message est envoyé au relais RL en réponse audit autre message de service MSG dans lequel le message de service MSG originellement transmis par ledit terminal EP était encapsulé. L'équipement serveur SERV 130 utilise une passerelle GW pour propager, jusqu'audit relais RL, ledit message de détachement. Ladite passerelle GW utilise alors la première fenêtre de réception Rx1 ou la seconde fenêtre de réception Rx2 qui ont été définies par l'envoi, par ledit relais RL, dudit autre message de service MSG (conformément à la Fig. 3B). Le relais RL va donc arrêter de propager les messages de service MSG issus du terminal EP en question (voir l'étape 710).

Dans une étape 1005, l'équipement serveur SERV 130 traite le message de service MSG transmis par ledit terminal EP et transmet un message de réponse à destination dudit terminal EP (donc sans passer par ledit relais RL). L'équipement serveur SERV 130 utilise une passerelle GW pour propager, jusqu'au terminal EP en question, ledit message de réponse. Ladite passerelle GW utilise alors la première fenêtre de réception Rx1 ou la seconde fenêtre de réception Rx2 qui ont été définies par l'envoi, par ledit terminal EP, dudit message de réponse (conformément à la Fig. 3B). Il est alors mis fin à l'algorithme de la Fig. 10.

Dans l'étape 1006, l'équipement serveur SERV 130 traite le message de service MSG transmis par ledit terminal EP et génère un message de réponse à destination dudit terminal EP. De plus, l'équipement serveur SERV 130 encapsule ledit message de réponse dans un autre message de réponse visant à répondre audit autre message de service MSG susmentionné. Cet autre message de réponse est donc adressé au relais RL auquel le terminal EP en question est rattaché. L'équipement serveur SERV 130 utilise une passerelle GW pour propager, jusqu'audit relais RL, ledit autre message de réponse. Ladite passerelle GW utilise alors la première fenêtre de réception Rx1 ou la seconde fenêtre de réception Rx2 qui ont été définies par l'envoi, par ledit relais RL, dudit autre message de service MSG (conformément à la Fig. 3B). Il est alors mis fin à l'algorithme de la Fig. 10.

Dans le mode de réalisation particulier susmentionné de l'équipement serveur SERV 130, à l'étape 1006, le serveur LNS 131 propage le message de service MSG, transmis par le terminal EP en question, à l'application de terminal EPA 133 en charge dudit terminal EP, afin que ledit message de service MSG soit traité par ladite application de terminal EPA 133. Ladite application de terminal EPA 133 génère alors ledit message de réponse et le passe au serveur LNS 131 pour envoi. Le serveur LNS 131 se rend compte que le terminal EP en question est rattaché audit relais RL. Le serveur LNS 131 passe alors ledit message de réponse, pour encapsulation dudit message de réponse, à l'application de relais RLA 132 en charge dudit relais RL.

La **Fig. 11** illustre schématiquement un exemple d'échanges de messages au sein du système de communication, en application d'un mode de réalisation de la présente invention.

Considérons que le terminal EP 110 cherche à s'enregistrer au sein du système de communication comportant le relais RL 100, la passerelle GW 120 et l'équipement serveur SERV 130. Le relais RL est déjà enregistré auprès de l'équipement serveur SERV 130 et est à portée radio de la passerelle GW 120. Le terminal EP 110 n'est par contre pas à portée radio de la passerelle GW 120, ni d'aucune autre passerelle GW du système de communication.

Dans une étape 1101, le terminal EP 110 effectue une transmission d'un message JOIN_REQUEST (JR) à destination de l'équipement serveur SERV 130. Le terminal EP 110 utilise le mode de communication en Classe A, en espérant que son message JOIN_REQUEST va être reçu par au moins une passerelle GW. Le terminal EP 110 n'obtient pas retour de la part d'une passerelle GW, ni dans la première fenêtre de réception Rx1 ni dans la seconde fenêtre de réception Rx2 (définies par rapport à l'envoi du message JOIN_REQUEST à l'étape 1101).

Dans une étape 1102, le terminal EP 110 réitère la transmission du message JOIN_REQUEST (JR) à destination de l'équipement serveur SERV 130. Le terminal EP 110 utilise encore le mode de communication en Classe A. Le terminal EP 110 n'obtient pas retour de la part d'une passerelle GW, ni dans la première fenêtre de réception Rx1 ni dans la seconde fenêtre de réception Rx2 (définies par rapport à l'envoi du message JOIN_REQUEST à l'étape 1102).

Dans une étape 1103, le terminal EP 110 réitère la transmission du message JOIN_REQUEST (JR) à destination de l'équipement serveur SERV 130. Le terminal EP 110 utilise encore le mode de communication en Classe A. Le terminal EP 110 n'obtient pas retour de la part d'une passerelle GW, ni dans la première fenêtre de réception Rx1 ni dans la seconde fenêtre de réception Rx2 (définies par rapport à l'envoi du message JOIN_REQUEST à l'étape 1102). Le terminal EP 110 considère alors avoir atteint le quota maximum de transmissions infructueuses de son message JOIN_REQUEST (JR), le terminal EP 110 décide de basculer en mode de communication en Classe A'.

Dans une étape 1104, le terminal EP 110 reçoit une balise B transmise par le relais RL 100. La balise spécifie les intervalles de temps SL, définis par rapport à l'émission de ladite balise B, pendant lesquels le relais RL 100 est à l'écoute du médium.

Dans une étape 1105, le terminal EP 110 attend l'occurrence d'un desdits intervalles de temps SL et réitère la transmission du message JOIN_REQUEST (JR) à destination de l'équipement serveur SERV 130. Le message JOIN_REQUEST (JR) est reçu par le relais RL 100.

Dans une étape 1106, le relais RL 100 transmet, à destination de l'équipement serveur SERV 130, un message de service MSG(JR) encapsulant le message JOIN_REQUEST (JR) transmis par le terminal EP 110 à l'étape 1105. Ce message de service MSG(JR) est reçu par la passerelle GW 120, qui le propage à l'équipement serveur SERV 130 dans une étape 1107. L'équipement serveur SERV 130 obtient, par des-encapsulation, le message JOIN_REQUEST (JR) transmis par le terminal EP 110 et le traite. Le terminal EP 110 est alors enregistré au sein du système de communication.

Dans une étape 1108, l'équipement serveur SERV 130 transmet un message de réponse REP(JA) au message de service émis par le relais RL 100 à l'étape 1106. L'équipement serveur SERV 130 s'adresse à la passerelle GW 120 pour propager ledit message de réponse REP(JA), qui encapsule un message JOIN_ACCEPT (JA) à adresser au terminal EP 110.

Dans une étape 1109, la passerelle GW 120 propage le message de réponse REP(JA) à destination du relais RL 100, qui reçoit ledit message de réponse REP(JA). La passerelle GW 120 utilise la première fenêtre de réception Rx1 ou la seconde fenêtre de réception Rx2, définies par rapport à l'envoi du message de service MSG(JR) par le relais RL 100 à l'étape 1106. Le relais RL 100 obtient, par des-encapsulation, le message JOINACCEPT (JA) à adresser au terminal EP 110 et le transmet dans une étape 1110. Le relais RL 100 note que le terminal EP 110 est désormais rattaché audit relais RL 100. Le terminal EP 110 reçoit le message JOIN_ACCEPT (JA) et sait être enregistré au sein du système de communication. Le terminal EP 110 est désormais autorisé à transmettre des messages de service MSG, qui sont alors relayés par le relais RL 100, et dont les réponses sont aussi relayées par le relais RL 100 (pour peu que le terminal EP 110 respecte les contraintes d'intervalles de temps SL imposées par le mode de communication en Classe A').

Ainsi, dans une phase de relais R 1111, des relais de messages de service MSG émis par le terminal EP 110 à destination de l'équipement serveur SERV 130 sont effectués. De plus, pendant cette phase de relais R 1111, le relais RL 100 assure le relais des messages de réponse que l'équipement serveur SERV 130 souhaite transmettre au terminal EP 110 en réponse auxdits messages de service MSG. Le relais RL 100 utilise, pour ce faire, la troisième fenêtre de réception Rx'1 ou la seconde fenêtre de réception Rx'2, définies par rapport à l'envoi du message de service MSG qui a été émis par le terminal EP 110 et auquel le message de réponse considéré réfère. Considérons que, à l'issue de cette phase de relais R 1111, la passerelle GW 120 devienne à portée radio du terminal EP 110, par exemple parce que le terminal EP 110 s'est déplacé.

Dans une étape 1112, le terminal EP 110 transmet un message de service MSG à destination de l'équipement serveur SERV 130, en attendant l'occurrence d'un desdits intervalles de temps SL précisés dans les balises B émises par le relais RL 100. Ce message de service MSG est reçu par le relais RL 100.

Dans une étape 1113a, le relais RL 100 transmet, à destination de l'équipement serveur SERV 130, un autre message de service MSG(MSG) encapsulant le message de service MSG transmis par le terminal EP 110 à l'étape 1112. Cet autre message de service MSG(MSG) est reçu par la passerelle GW 120, qui le propage à l'équipement serveur SERV 130 dans une étape 1114a. L'équipement serveur SERV 130 obtient, par des-encapsulation, le message de service MSG transmis par le terminal EP 110.

En parallèle, le message de service MSG a aussi été reçu par la passerelle GW 120 dans une étape 1113b. La passerelle GW 120 le propage à l'équipement serveur SERV 130 dans une étape 1114b. L'équipement serveur SERV 130 obtient alors une autre copie du message de service MSG transmis par le terminal EP 110. L'équipement serveur SERV 130 note donc avoir reçu à la fois ce message de service MSG via le relais RL 100 comme attendu (puisque le terminal EP 110 est rattaché au relais RL 100), mais aussi par réception directe de la passerelle GW 120.

Dans une étape 1115a, l'équipement serveur SERV 130 envoie à destination du relais RL 100, en réponse audit autre message de service MSG(MSG), un message de détachement DETACH par lequel l'équipement serveur SERV 130 instruit le relais RL 100 que le terminal EP 110 ne lui est plus rattaché. L'équipement serveur SERV 130 s'adresse à la passerelle GW 120 pour propager ledit message de détachement DETACH.

Dans une étape 1116a, la passerelle GW 120 propage le message de détachement DETACH à destination du relais RL 100. La passerelle GW 120 utilise la première fenêtre de réception Rx1 ou la seconde fenêtre de réception Rx2, définies par rapport à l'envoi dudit autre message de service MSG(MSG) par le relais RL 100 à l'étape 1113a. Le relais RL 100 reçoit ledit message de détachement DETACH et note que le terminal EP 110 n'est désormais plus rattaché audit relais RL 100. Le relais RL 100 ne relaie désormais plus les messages de service MSG transmis par le terminal EP 110 (pour les coïncidences où le terminal EP 110 enverrait un tel message de service MSG exactement pendant une occurrence d'intervalle de temps SL parmi ceux spécifiés dans les balises B émises par le relais RL 100, ce qui est fort peu probable).

Dans une étape 1115b, l'équipement serveur SERV 130 envoie à destination du terminal EP 110, en réponse audit message de service MSG transmis par le terminal EP 110, un message de réponse REP. L'équipement serveur SERV 130 s'adresse à la passerelle GW 120 pour propager ledit message de réponse REP à destination du terminal EP 110.

Dans une étape 1116b, la passerelle GW 120 propage le message de réponse REP à destination du terminal EP 110. Le terminal EP 110 reçoit ledit message de réponse REP et note que ledit message de réponse REP a été transmis dans la première fenêtre de réception Rx1 ou dans la seconde fenêtre de réception Rx2, par rapport à l'envoi du message de service MSG à l'étape 1112. Le terminal EP en conclut être désormais à portée radio d'une passerelle GW du système de communication, et bascule en mode de communication en Classe A.

## Revendications

1. Procédé de transmission dans un système de communication incluant un équipement serveur (130) et au moins une passerelle (120, 121, 122) connectée à l'équipement serveur, chaque passerelle étant configurée pour communiquer avec au moins un terminal (110, 111, 112, 113) via un réseau de communication de type LPWAN en utilisant un mode de communication, dit en Classe A, défini comme suit :
- ladite passerelle reçoit un message d'origine en provenance d'un dit terminal et propage ledit message d'origine reçu, à destination de l'équipement serveur ;
- sur réception d'un message de réponse de l'équipement serveur, ladite passerelle propage le message de réponse à destination dudit terminal en utilisant au moins une fenêtre de réception (Rx1, Rx2) définie par rapport à un temps de transmission dudit message d'origine par ledit terminal ;
**caractérisé en ce que** le système de communication inclut en outre au moins un relais (100) vu comme un terminal par chaque passerelle, chaque relais utilisant le mode de communication en Classe A pour communiquer avec une ou plusieurs dites passerelles, et utilisant pour communiquer avec un ou plusieurs terminaux un autre mode de communication, dit en Classe A', défini comme suit :
- le relais transmet à intervalles réguliers des balises (B), chaque balise incluant des informations représentatives d'au moins un intervalle de temps (SLO, SLx) prédéfini par rapport à ladite balise ;
- le relais est à l'écoute (701) d'éventuels messages d'origine émis par un ou plusieurs terminaux, à destination de l'équipement serveur, uniquement pendant chaque dit intervalle de temps ;
- en cas de message de réponse de l'équipement serveur fourni via une dite passerelle en mode de communication en Classe A, ledit relais propage (712) le message de réponse à destination dudit terminal en utilisant au moins une autre fenêtre de réception (Rx'1, Rx'2) définie par rapport à un temps de transmission dudit message d'origine par ledit terminal, chaque dite autre fenêtre de réception (Rx'1, Rx'2) étant décalée postérieurement d'un temps prédéfini (Δ5) par rapport à chaque fenêtre de réception (Rx1, Rx2) définie en mode de communication en Classe A ;
et **en ce que**, sur réception (701, 702) par un dit relais d'un message d'origine émis par un dit terminal en mode de communication en Classe A', ledit relais effectue les étapes suivantes :
- effectuer (705) une encapsulation du message d'origine dans un autre message à destination de l'équipement serveur ;
- transmettre (705) ledit autre message en mode de communication en Classe A, de sorte qu'au moins une dite passerelle propage ledit autre message à l'équipement serveur ;
- en cas de message de réponse de l'équipement serveur fourni via une dite passerelle en utilisant (706) une fenêtre de réception définie en mode de communication en Classe A par rapport à la transmission dudit autre message par ledit relais, effectuer (707) une des-encapsulation d'un autre message de réponse contenu dans ledit message de réponse et propager (712) ledit autre message de réponse à destination dudit terminal dans une dite autre fenêtre de réception définie en mode de communication en Classe A' par rapport à la transmission dudit message d'origine par ledit terminal ;
et **en ce que**, sur réception (1001) d'un message propagé par une ou plusieurs passerelles, lorsque le message reçu inclut un message relayé par un dit relais, l'équipement serveur effectue les étapes suivantes :
- effectuer (1001) une des-encapsulation du message relayé ;
- traiter (1005) le message relayé, afin d'obtenir un message de réponse à adresser au terminal ayant émis le message qui a été relayé ;
- effectuer (1006) une encapsulation du message de réponse dans un autre message de réponse à adresser au relais ; et
- transmettre (1006) ledit autre message de réponse à une passerelle, afin que ladite passerelle propage ledit autre message de réponse audit relais dans une dite fenêtre de réception définie en mode de communication en Classe A par rapport à la transmission par ledit terminal dudit message propagé.

2. Procédé selon la revendication 1, **caractérisé en ce que** chaque relais est initialisé comme suit :
- ledit relais transmet (402) un message d'enregistrement à destination de l'équipement serveur ;
- en cas de message de réponse (403, 404) de l'équipement serveur fourni via une dite passerelle, le relais transmet (407) un message de récupération de paramètres de balises à destination de l'équipement serveur ;
- en cas de message de réponse (408, 409) de l'équipement serveur fourni via une dite passerelle, le relais programme (411) l'envoi desdites balises et programme (411) l'écoute pendant chaque dit intervalle de temps, ledit message de réponse incluant des informations représentatives de chaque dit intervalle de temps.

3. Procédé selon l'une quelconque des revendications 1 et 2, **caractérisé en ce que**, sur réception (701, 702) par un dit relais d'un message d'origine émis par un dit terminal en mode de communication en Classe A', le relais effectue les étapes suivantes :
- lorsque le message d'origine est un message d'enregistrement dudit terminal à destination de l'équipement serveur, ledit relais propage ledit message d'origine à destination de l'équipement serveur, et sur réception d'un message de réponse en provenance de l'équipement serveur, ledit relais considère que le ledit terminal est rattaché audit relais ;
- lorsque le message d'origine est un autre message, ledit relais propage ledit message d'origine à destination de l'équipement serveur uniquement si ledit terminal est rattaché audit relais.

4. Procédé selon la revendication 3, **caractérisé en ce que**, sur réception d'un message propagé par une ou plusieurs passerelles, lorsque le message reçu inclut un message relayé par un dit relais, l'équipement serveur détermine (903, 1002) si le message relayé a aussi été reçu directement via au moins une dite passerelle, et si tel est le cas, l'équipement serveur effectue les étapes suivantes :
- traiter (1005) le message relayé, afin d'obtenir un message de réponse à adresser au terminal ayant émis le message qui a été relayé ;
- transmettre (1006) ledit message de réponse à une passerelle, afin que ladite passerelle propage ledit message de réponse audit terminal dans une dite fenêtre de réception définie en mode de communication en Classe A par rapport à la transmission par ledit terminal du message qui a été relayé ;
- transmettre (1004) au relais un message de détachement indiquant audit relais que ledit terminal n'est plus rattaché audit relais ;
et **en ce que** le terminal est à l'écoute dans chaque dite fenêtre de réception définie en mode de communication en Classe A et dans chaque dite fenêtre de réception définie en mode de communication en Classe A', et lorsque ledit terminal reçoit un message de réponse dans une dite fenêtre de réception définie en mode de communication en Classe A, ledit terminal bascule (614) en mode de communication en Classe A.

5. Procédé selon l'une quelconque des revendications 1 à 4, **caractérisé en ce que** deux fenêtres de réception (Rx1, Rx2) sont définies en mode de communication en Classe A et deux fenêtres de réception (Rx'1, Rx'2) sont définies en mode de communication en Classe A'.

6. Procédé selon l'une quelconque des revendications 1 à 5, **caractérisé en ce que** chaque fenêtre de réception en mode de communication en Classe A' est de durée supérieure à chaque fenêtre de réception correspondante en mode de communication en Classe A.

7. Procédé selon l'une quelconque des revendications 1 à 6, **caractérisé en ce que** l'équipement serveur (130) comporte au moins une application de relais (132), chaque application de relais étant en charge d'effectuer les encapsulations et des-encapsulations vis-à-vis d'un ou plusieurs dits relais.

8. Procédé, implémenté par un relais (100), dans le cadre d'une transmission dans un système de communication incluant un équipement serveur (130) et au moins une passerelle (120, 121, 122) connectée à l'équipement serveur, chaque passerelle étant configurée pour communiquer avec au moins un terminal (110, 111, 112, 113) via un réseau de communication de type LPWAN en utilisant un mode de communication, dit en Classe A, défini comme suit :
- ledit terminal souhaitant communiquer avec l'équipement serveur directement via une dite passerelle transmet un message d'origine à destination de l'équipement serveur ;
- ledit terminal est à l'écoute d'un éventuel message de réponse de l'équipement serveur propagé via une dite passerelle pendant au moins une fenêtre de réception (Rx1, Rx2) définie par rapport à un temps de transmission dudit message d'origine par ledit terminal ;
**caractérisé en ce que** le système de communication inclut en outre ledit relais (100) qui est vu comme un terminal par chaque passerelle, ledit relais utilisant le mode de communication en Classe A pour communiquer avec une ou plusieurs dites passerelles, et utilisant pour communiquer avec un ou plusieurs terminaux un autre mode de communication, dit en Classe A', défini comme suit :
- le relais transmet à intervalles réguliers des balises (B), chaque balise incluant des informations représentatives d'au moins un intervalle de temps (SLO, SLx) prédéfini par rapport à ladite balise ;
- le relais est à l'écoute (701) d'éventuels messages d'origine émis par un ou plusieurs terminaux, à destination de l'équipement serveur, uniquement pendant chaque dit intervalle de temps ;
- en cas de message de réponse de l'équipement serveur fourni via une dite passerelle en mode de communication en Classe A, ledit relais propage (712) le message de réponse à destination dudit terminal en utilisant au moins une autre fenêtre de réception (Rx'1, Rx'2) définie par rapport à un temps de transmission dudit message d'origine par ledit terminal, chaque dite autre fenêtre de réception (Rx'1, Rx'2) étant décalée postérieurement d'un temps prédéfini (Δ5) par rapport à chaque fenêtre de réception (Rx1, Rx2) définie en mode de communication en Classe A ;
et **en ce que**, sur réception (701, 702) par ledit relais d'un message d'origine émis par un dit terminal en mode de communication en Classe A', ledit relais effectue les étapes suivantes :
- effectuer (705) une encapsulation du message d'origine dans un autre message à destination de l'équipement serveur ;
- transmettre (705) ledit autre message en mode de communication en Classe A, de sorte qu'au moins une dite passerelle propage ledit autre message à l'équipement serveur ;
- en cas de message de réponse de l'équipement serveur fourni (706) via une dite passerelle en utilisant une fenêtre de réception définie en mode de communication en Classe A par rapport à la transmission dudit autre message par ledit relais, effectuer (707) une des-encapsulation d'un autre message de réponse contenu dans ledit message de réponse et propager (712) ledit autre message de réponse à destination dudit terminal dans une dite autre fenêtre de réception définie en mode de communication en Classe A' par rapport à la transmission dudit message d'origine par ledit terminal.

9. Procédé, implémenté par un terminal (110), dans le cadre d'une transmission dans un système de communication incluant un équipement serveur (130) et au moins une passerelle (120, 121, 122) connectée à l'équipement serveur, ledit terminal étant configuré pour communiquer avec au moins une dite passerelle via un réseau de communication de type LPWAN en utilisant un mode de communication, dit en Classe A, défini comme suit :
- ledit terminal souhaitant communiquer avec l'équipement serveur directement via une dite passerelle transmet un message d'origine à destination de l'équipement serveur ;
- ledit terminal est à l'écoute d'un éventuel message de réponse de l'équipement serveur propagé via une dite passerelle pendant au moins une fenêtre de réception (Rx1, Rx2) définie par rapport à un temps de transmission dudit message d'origine par ledit terminal ;
**caractérisé en ce que**, le système de communication incluant en outre au moins un relais (100), ledit terminal est configuré pour communiquer avec chaque relais selon un autre mode de communication, dit en Classe A', défini comme suit :
- le terminal reçoit des balises (B) émises par un dit relais, chaque balise incluant des informations représentatives d'au moins un intervalle de temps (SLO, SLx) prédéfini par rapport à ladite balise ;
- ledit terminal souhaitant communiquer avec l'équipement serveur via ledit relais transmet un message d'origine à destination de l'équipement serveur, uniquement pendant un dit intervalle de temps ;
- ledit terminal est à l'écoute (615) d'un éventuel message de réponse de l'équipement serveur propagé via ledit relais pendant au moins une autre fenêtre de réception (Rx'1, Rx'2) définie par rapport à un temps de transmission dudit message d'origine par ledit terminal, chaque dite autre fenêtre de réception (Rx'1, Rx'2) étant décalée postérieurement d'un temps prédéfini par rapport à chaque fenêtre de réception (Rx1, Rx2) définie en mode de communication en Classe A.

10. Procédé, implémenté par un équipement serveur (130), dans le cadre d'une transmission dans un système de communication incluant ledit équipement serveur et au moins une passerelle (120, 121, 122) connectée à l'équipement serveur, chaque passerelle étant configurée pour communiquer avec au moins un terminal (110, 111, 112, 113) via un réseau de communication de type LPWAN,
**caractérisé en ce que** le système de communication incluant en outre au moins un relais (100), sur réception (1001) d'un message propagé par une ou plusieurs passerelles, lorsque le message reçu inclut un message relayé par un dit relais, l'équipement serveur effectue les étapes suivantes :
- effectuer (1001) une des-encapsulation du message relayé ;
- traiter (1005) le message relayé, afin d'obtenir un message de réponse à adresser au terminal ayant émis le message qui a été relayé ;
- effectuer (1005) une encapsulation du message de réponse dans un autre message de réponse à adresser au relais ; et
- transmettre (1006) ledit autre message de réponse à une passerelle, afin que ladite passerelle propage ledit autre message de réponse audit relais.

11. Programme d'ordinateur comportant un ensemble d'instructions causant une exécution, par un processeur (210), du procédé selon la revendication 8 ou selon la revendication 9 ou selon la revendication 10, lorsque ledit programme d'ordinateur est exécuté par ledit processeur.

12. Support de stockage d'informations stockant un programme d'ordinateur comportant un ensemble d'instructions causant une exécution, par un processeur (210), du procédé selon la revendication 8 ou selon la revendication 9 ou selon la revendication 10, lorsque ledit programme d'ordinateur est exécuté par ledit processeur.

13. Système de communication incluant un équipement serveur (130) et au moins une passerelle (120, 121, 122) connectée à l'équipement serveur, chaque passerelle étant configurée pour communiquer avec au moins un terminal (110, 111, 112, 113) via un réseau de communication de type LPWAN en utilisant un mode de communication, dit en Classe A, défini comme suit :
- ladite passerelle est configurée pour recevoir un message d'origine en provenance d'un dit terminal et propage ledit message d'origine reçu, à destination de l'équipement serveur ;
- sur réception d'un message de réponse de l'équipement serveur, ladite passerelle est configurée pour propager le message de réponse à destination dudit terminal en utilisant au moins une fenêtre de réception (Rx1, Rx2) définie par rapport à un temps de transmission dudit message d'origine par ledit terminal ;
**caractérisé en ce que** le système de communication inclut en outre au moins un relais (100) vu comme un terminal par chaque passerelle, chaque relais étant configuré pour utiliser le mode de communication en Classe A pour communiquer avec une ou plusieurs dites passerelles, et pour utiliser pour communiquer avec un ou plusieurs terminaux un autre mode de communication, dit en Classe A', défini comme suit :
- le relais est configuré pour transmettre à intervalles réguliers des balises (B), chaque balise incluant des informations représentatives d'au moins un intervalle de temps (SLO, SLx) prédéfini par rapport à ladite balise ;
- le relais est configuré pour être à l'écoute (701) d'éventuels messages d'origine émis par un ou plusieurs terminaux, à destination de l'équipement serveur, uniquement pendant chaque dit intervalle de temps ;
- en cas de message de réponse de l'équipement serveur fourni via une dite passerelle en mode de communication en Classe A, ledit relais est configuré pour propager (712) le message de réponse à destination dudit terminal en utilisant au moins une autre fenêtre de réception (Rx'1, Rx'2) définie par rapport à un temps de transmission dudit message d'origine par ledit terminal, chaque dite autre fenêtre de réception (Rx'1, Rx'2) étant décalée postérieurement d'un temps prédéfini (Δ5) par rapport à chaque fenêtre de réception (Rx1, Rx2) définie en mode de communication en Classe A ;
et **en ce que**, sur réception (701, 702) par un dit relais d'un message d'origine émis par un dit terminal en mode de communication en Classe A', ledit relais implémente :
- des moyens pour effectuer (705) une encapsulation du message d'origine dans un autre message à destination de l'équipement serveur ;
- des moyens pour transmettre (705) ledit autre message en mode de communication en Classe A, de sorte qu'au moins une dite passerelle propage ledit autre message à l'équipement serveur ;
- en cas de message de réponse (706) de l'équipement serveur fourni via une dite passerelle en utilisant une fenêtre de réception définie en mode de communication en Classe A par rapport à la transmission dudit autre message par ledit relais, des moyens pour effectuer (707) une des-encapsulation d'un autre message de réponse contenu dans ledit message de réponse et des moyens pour propager (712) ledit autre message de réponse à destination dudit terminal dans une dite autre fenêtre de réception définie en mode de communication en Classe A' par rapport à la transmission dudit message d'origine par ledit terminal ;
et **en ce que** sur réception (1001) d'un message propagé par une ou plusieurs passerelles, lorsque le message reçu inclut un message relayé par un dit relais, l'équipement serveur implémente :
- des moyens pour effectuer (1001) une des-encapsulation du message relayé ;
- des moyens pour traiter (1005) le message relayé, afin d'obtenir un message de réponse à adresser au terminal ayant émis le message qui a été relayé ;
- des moyens pour (1006) effectuer une encapsulation du message de réponse dans un autre message de réponse à adresser au relais ; et
- des moyens pour transmettre (1006) ledit autre message de réponse à une passerelle, afin que ladite passerelle propage ledit autre message de réponse audit relais dans une dite fenêtre de réception définie en mode de communication en Classe A par rapport à la transmission par ledit terminal dudit message propagé.

14. Relais (100) destiné à être utilisé dans un système de communication incluant un équipement serveur (130) et au moins une passerelle (120, 121, 122) connectée à l'équipement serveur, chaque passerelle étant configurée pour communiquer avec au moins un terminal (110, 111, 112, 113) via un réseau de communication de type LPWAN en utilisant un mode de communication, dit en Classe A, défini comme suit :
- ledit terminal souhaitant communiquer avec l'équipement serveur directement via une dite passerelle est configuré pour transmettre un message d'origine à destination de l'équipement serveur ;
- ledit terminal est configuré pour être à l'écoute d'un éventuel message de réponse de l'équipement serveur propagé via une dite passerelle pendant au moins une fenêtre de réception (Rx1, Rx2) définie par rapport à un temps de transmission dudit message d'origine par ledit terminal ;
**caractérisé en ce que**, ledit relais étant vu comme un terminal par chaque passerelle, ledit relais est configuré pour utiliser le mode de communication en Classe A pour communiquer avec une ou plusieurs dites passerelles, et pour utiliser pour communiquer avec un ou plusieurs terminaux un autre mode de communication, dit en Classe A', défini comme suit :
- le relais est configuré pour transmettre à intervalles réguliers des balises (B), chaque balise incluant des informations représentatives d'au moins un intervalle de temps prédéfini par rapport à ladite balise ;
- le relais est configuré pour être à l'écoute (701) d'éventuels messages d'origine émis par un ou plusieurs terminaux, à destination de l'équipement serveur, uniquement pendant chaque dit intervalle de temps ;
- en cas de message de réponse (706) de l'équipement serveur fourni via une dite passerelle en mode de communication en Classe A, ledit relais est configuré pour propager (712) le message de réponse à destination dudit terminal en utilisant au moins une autre fenêtre de réception (Rx'1, Rx'2) définie par rapport à un temps de transmission dudit message d'origine par ledit terminal, chaque dite autre fenêtre de réception (Rx'1, Rx'2) étant décalée postérieurement d'un temps prédéfini (Δ5) par rapport à chaque fenêtre de réception (Rx1, Rx2) définie en mode de communication en Classe A ;
et **en ce que**, sur réception (701) par ledit relais d'un message d'origine émis par un dit terminal en mode de communication en Classe A', ledit relais implémente :
- des moyens pour effectuer (705) une encapsulation du message d'origine dans un autre message à destination de l'équipement serveur ;
- des moyens pour transmettre (705) ledit autre message en mode de communication en Classe A, de sorte qu'au moins une dite passerelle propage ledit autre message à l'équipement serveur ;
- en cas de message de réponse (706) de l'équipement serveur fourni via une dite passerelle en utilisant une fenêtre de réception définie en mode de communication en Classe A par rapport à la transmission dudit autre message par ledit relais, des moyens pour effectuer (707) une des-encapsulation d'un autre message de réponse contenu dans ledit message de réponse et des moyens pour propager (712) ledit autre message de réponse à destination dudit terminal dans une dite autre fenêtre de réception (Rx'1, Rx'2) définie en mode de communication en Classe A' par rapport à la transmission dudit message d'origine par ledit terminal.

15. Terminal (110) destiné à être utilisé avec un système de communication incluant un équipement serveur (130) et au moins une passerelle (120, 121, 122) connectée à l'équipement serveur, ledit terminal étant configuré pour communiquer avec au moins une dite passerelle via un réseau de communication de type LPWAN en utilisant un mode de communication, dit en Classe A, défini comme suit :
- ledit terminal souhaitant communiquer avec l'équipement serveur directement via une dite passerelle est configuré pour transmettre un message d'origine à destination de l'équipement serveur ;
- ledit terminal est configuré pour être à l'écoute d'un éventuel message de réponse de l'équipement serveur propagé via une dite passerelle pendant au moins une fenêtre de réception (Rx1, Rx2) définie par rapport à un temps de transmission dudit message d'origine par ledit terminal ;
**caractérisé en ce que**, le système de communication incluant en outre au moins un relais (100), ledit terminal est configuré pour communiquer avec chaque relais selon un autre mode de communication, dit en Classe A', défini comme suit :
- le terminal est configuré pour recevoir des balises (B) émises par un dit relais, chaque balise incluant des informations représentatives d'au moins un intervalle de temps (SLO, SLx) prédéfini par rapport à ladite balise ;
- ledit terminal souhaitant communiquer avec l'équipement serveur via ledit relais est configuré pour transmettre un message d'origine à destination de l'équipement serveur, uniquement pendant un dit intervalle de temps ;
- ledit terminal est configuré pour être à l'écoute (615) d'un éventuel message de réponse de l'équipement serveur propagé via ledit relais pendant au moins une autre fenêtre de réception (Rx'1, Rx'2) définie par rapport à un temps de transmission dudit message d'origine par ledit terminal, chaque dite autre fenêtre de réception (Rx'1, Rx'2) étant décalée postérieurement d'un temps prédéfini (Δ5) par rapport à chaque fenêtre de réception (Rx1, Rx2) définie en mode de communication en Classe A.

16. Equipement serveur (130) destiné à être utilisé dans un système de communication incluant ledit équipement serveur et au moins une passerelle (120, 121, 122) connectée à l'équipement serveur, chaque passerelle étant configurée pour communiquer avec au moins un terminal (110, 111, 112, 113) via un réseau de communication de type LPWAN,
**caractérisé en ce que**, le système de communication incluant en outre au moins un relais (100), sur réception (1001) d'un message propagé par une ou plusieurs passerelles, lorsque le message reçu inclut un message relayé par un dit relais, l'équipement serveur implémente :
- des moyens pour effectuer (1001) une des-encapsulation du message relayé ;
- des moyens pour traiter (1005) le message relayé, afin d'obtenir un message de réponse à adresser au terminal ayant émis le message qui a été relayé ;
- des moyens pour effectuer (1006) une encapsulation du message de réponse dans un autre message de réponse à adresser au relais ; et
- des moyens pour transmettre (1006) ledit autre message de réponse à une passerelle, afin que ladite passerelle propage ledit autre message de réponse audit relais.

## Patentansprüche

1. Übertragungsverfahren in einem Kommunikationssystem, das eine Serverausrüstung (130) und mindestens ein mit der Serverausrüstung verbundenes Gateway (120, 121, 122) enthält, wobei jedes Gateway konfiguriert ist, mit mindestens einem Endgerät (110, 111, 112, 113) über ein Kommunikationsnetz des Typs LPWAN unter Verwendung eines Kommunikationsmodus genannt in Klasse A zu kommunizieren, der wie folgt definiert wird:
- das Gateway empfängt eine Ursprungsnachricht von einem Endgerät und verbreitet die empfangene Ursprungsnachricht an die Serverausrüstung;
- bei Empfang einer Antwortnachricht von der Serverausrüstung verbreitet das Gateway die Antwortnachricht an das Endgerät unter Verwendung mindestens eines bezüglich einer Übertragungszeit der Ursprungsnachricht durch das Endgerät definierten Empfangsfensters (Rx1, Rx2);
**dadurch gekennzeichnet, dass** das Kommunikationssystem außerdem mindestens ein Relais (100) enthält, das von jedem Gateway als ein Endgerät gesehen wird, wobei jedes Relais den Kommunikationsmodus in Klasse A verwendet, um mit einem oder mehreren der Gateways zu kommunizieren, und einen anderen Kommunikationsmodus genannt in Klasse A' verwendet, um mit einem oder mehreren Endgeräten zu kommunizieren, der wie folgt definiert wird:
- das Relais überträgt in regelmäßigen Abständen Tags (B), wobei jedes Tag Informationen enthält, die für mindestens einen bezüglich des Tags vordefinierten Zeitschlitz (SLO, SLx) repräsentativ sind;
- das Relais hört mögliche Ursprungsnachrichten (701), die von einem oder mehreren Endgeräten an die Serverausrüstung gesendet werden, nur während jedes Zeitschlitzes ab;
- im Fall einer Antwortnachricht von der Serverausrüstung, die über ein Gateway im Kommunikationsmodus in Klasse A geliefert wird, verbreitet (712) das Relais die Antwortnachricht an das Endgerät unter Verwendung mindestens eines bezüglich einer Übertragungszeit der Ursprungsnachricht durch das Endgerät definierten anderen Empfangsfensters (Rx'1, Rx'2), wobei jedes andere Empfangsfenster (Rx'1, Rx'2) später um eine vordefinierte Zeit (Δ5) bezüglich jedes im Kommunikationsmodus in Klasse A definierten Empfangsfensters (Rx1, Rx2) verschoben wird;
und dass bei Empfang (701, 702) einer von einem Endgerät im Kommunikationsmodus in Klasse A' gesendeten Ursprungsnachricht durch ein Relais das Relais die folgenden Schritte ausführt:
- Ausführen (705) einer Kapselung der Ursprungsnachricht in einer anderen Nachricht an die Serverausrüstung;
- Übertragen (705) der anderen Nachricht im Kommunikationsmodus in Klasse A, so dass mindestens ein Gateway die andere Nachricht an die Serverausrüstung verbreitet;
- im Fall einer Antwortnachricht der Serverausrüstung, die über ein Gateway unter Verwendung (706) eines im Kommunikationsmodus in Klasse A bezüglich der Übertragung der anderen Nachricht durch das Relais definierten Empfangsfensters geliefert wird, Ausführen (707) einer Entkapselung einer in der Antwortnachricht enthaltenen anderen Antwortnachricht und Verbreiten (712) der anderen Antwortnachricht an das Endgerät in einem im Kommunikationsmodus in Klasse A' bezüglich der Übertragung der Ursprungsnachricht durch das Endgerät definierten anderen Empfangsfenster;
und dass bei Empfang (1001) einer von einem oder mehreren Gateways verbreiteten Nachricht, wenn die empfangene Nachricht eine von einem Relais weitergeleitete Nachricht enthält, die Serverausrüstung die folgenden Schritte ausführt:
- Ausführen (1001) einer Entkapselung der weitergeleiteten Nachricht;
- Verarbeiten (1005) der weitergeleiteten Nachricht, um eine Antwortnachricht zu erhalten, die an das Endgerät zu senden ist, das die Nachricht gesendet hat, die weitergeleitet wurde;
- Ausführen (1006) einer Kapselung der Antwortnachricht in einer an das Relais zu richtenden anderen Antwortnachricht; und
- Übertragen (1006) der anderen Antwortnachricht an ein Gateway, damit das Gateway die andere Antwortnachricht in einem im Kommunikationsmodus in Klasse A bezüglich der Übertragung der verbreiteten Nachricht durch das Endgerät definierten Empfangsfenster an das Relais verbreitet.

2. Verfahren nach Anspruch 1, **dadurch gekennzeichnet, dass** jedes Relais folgendermaßen initialisiert wird:
- das Relais überträgt (402) eine Registrierungsnachricht an die Serverausrüstung;
- im Fall einer über ein Gateway gelieferten Antwortnachricht (403, 404) von der Serverausrüstung überträgt (407) das Relais eine Wiedergewinnungsnachricht von Tag-Parametern an die Serverausrüstung;
- im Fall einer über ein Gateway gelieferten Antwortnachricht (408, 409) von der Serverausrüstung programmiert (411) das Relais das Schicken der Tags und programmiert (411) das Abhören während jedes Zeitschlitzes, wobei die Antwortnachricht für jeden Zeitschlitz repräsentative Informationen enthält.

3. Verfahren nach einem der Ansprüche 1 und 2, **dadurch gekennzeichnet, dass** bei Empfang (701, 702) einer von einem Endgerät im Kommunikationsmodus in Klasse A' gesendeten Ursprungsnachricht durch ein Relais das Relais die folgenden Schritte ausführt:
- wenn die Ursprungsnachricht eine Registrierungsnachricht des Endgeräts an die Serverausrüstung ist, verbreitet das Relais die Ursprungsnachricht an die Serverausrüstung, und bei Empfang einer Antwortnachricht von der Serverausrüstung nimmt das Relais an, dass das Endgerät mit dem Relais verbunden ist;
- wenn die Ursprungsnachricht eine andere Nachricht ist, verbreitet das Relais die Ursprungsnachricht an die Serverausrüstung nur, wenn das Endgerät mit dem Relais verbunden ist.

4. Verfahren nach Anspruch 3, **dadurch gekennzeichnet, dass** bei Empfang einer von einem oder mehreren Gateways verbreiteten Nachricht, wenn die empfangene Nachricht eine von einem Relais weitergeleitete Nachricht enthält, die Serverausrüstung bestimmt (903, 1002), ob die weitergeleitete Nachricht auch direkt über mindestens ein Gateway empfangen wurde, und wenn dies der Fall ist, die Serverausrüstung die folgenden Schritte ausführt:
- Verarbeiten (1005) der weitergeleiteten Nachricht, um eine Antwortnachricht zu erhalten, die an das Endgerät zu richten ist, das die Nachricht gesendet hat, die weitergeleitet wurde;
- Übertragen (1006) der Antwortnachricht an ein Gateway, damit das Gateway die Antwortnachricht in einem im Kommunikationsmodus in Klasse A bezüglich der Übertragung durch das Endgerät der Nachricht, die weitergeleitet wurde, definierten Empfangsfenster an das Endgerät verbreitet;
- Übertragen (1004) einer Trennnachricht an das Relais, die dem Relais anzeigt, dass das Endgerät nicht mehr mit dem Relais verbunden ist;
und dass das Endgerät in jedem im Kommunikationsmodus in Klasse A definierten Empfangsfenster und in jedem im Kommunikationsmodus in Klasse A' definierten Empfangsfenster abhört, und wenn das Endgerät eine Antwortnachricht in einem im Kommunikationsmodus in Klasse A definierten Empfangsfenster empfängt, das Endgerät in den Kommunikationsmodus in Klasse A umschaltet (614).

5. Verfahren nach einem der Ansprüche 1 bis 4, **dadurch gekennzeichnet, dass** zwei Empfangsfenster (Rx1, Rx2) im Kommunikationsmodus in Klasse A definiert sind und zwei Empfangsfenster (Rx'1, Rx'2) im Kommunikationsmodus in Klasse A' definiert sind.

6. Verfahren nach einem der Ansprüche 1 bis 5, **dadurch gekennzeichnet, dass** jedes Empfangsfenster im Kommunikationsmodus in Klasse A' eine längere Dauer hat als jedes entsprechende Empfangsfenster im Kommunikationsmodus in Klasse A.

7. Verfahren nach einem der Ansprüche 1 bis 6, **dadurch gekennzeichnet, dass** die Serverausrüstung (130) mindestens eine Relaisanwendung (132) aufweist, wobei jede Relaisanwendung die Aufgabe hat, die Kapselungen und Entkapselungen gegenüber einem oder mehreren der Relais auszuführen.

8. Verfahren, implementiert durch ein Relais (100), im Rahmen einer Übertragung in einem Kommunikationssystem, das eine Serverausrüstung (130) und mindestens ein mit der Serverausrüstung verbundenes Gateway (120, 121, 122) enthält, wobei jedes Gateway konfiguriert ist, mit mindestens einem Endgerät (110, 111, 112, 113) über ein Kommunikationsnetz des Typs LPWAN unter Verwendung eines Kommunikationsmodus in Klasse A zu kommunizieren, der folgendermaßen definiert wird:
- das Endgerät, das mit der Serverausrüstung direkt über ein Gateway kommunizieren möchte, überträgt eine Ursprungsnachricht an die Serverausrüstung;
- das Endgerät hört eine mögliche Antwortnachricht der Serverausrüstung ab, die über ein Gateway während mindestens eines bezüglich einer Übertragungszeit der Ursprungsnachricht durch das Endgerät definierten Empfangsfensters (Rx1, Rx2) verbreitet wird;
**dadurch gekennzeichnet, dass** das Kommunikationssystem außerdem das Relais (100) enthält, das von jedem Gateway als ein Endgerät gesehen wird, wobei das Relais den Kommunikationsmodus in Klasse A verwendet, um mit einem oder mehreren der Gateways zu kommunizieren, und einen anderen Kommunikationsmodus genannt in Klasse A' verwendet, um mit einem oder mehreren Endgeräten zu kommunizieren, der folgendermaßen definiert wird:
- das Relais überträgt in regelmäßigen Abständen Tags (B), wobei jedes Tag für mindestens einen bezüglich des Tags vordefinierten Zeitschlitz (SLO, SLx) repräsentative Informationen enthält;
- das Relais hört (701) mögliche Ursprungsnachrichten, die von einem oder mehreren Endgeräten an die Serverausrüstung gesendet werden, nur während jedes Zeitschlitzes ab;
- im Fall einer Antwortnachricht von der Serverausrüstung, die über ein Gateway im Kommunikationsmodus in Klasse A geliefert wird, verbreitet (712) das Relais die Antwortnachricht an das Endgerät unter Verwendung mindestens eines bezüglich einer Übertragungszeit der Ursprungsnachricht durch das Endgerät definierten anderen Empfangsfensters (Rx'1, Rx'2), wobei jedes andere Empfangsfenster (Rx'1, Rx'2) später um eine vordefinierte Zeit (Δ5) bezüglich jedes im Kommunikationsmodus in Klasse A definierten Empfangsfensters (Rx1, Rx2) verschoben wird;
und dass bei Empfang (701, 702) einer von einem Endgerät im Kommunikationsmodus in Klasse A' gesendeten Ursprungsnachricht durch das Relais das Relais die folgenden Schritte ausführt:
- Ausführen (705) einer Kapselung der Ursprungsnachricht in einer anderen Nachricht an die Serverausrüstung;
- Übertragen (705) der anderen Nachricht im Kommunikationsmodus in Klasse A, damit mindestens ein Gateway die andere Nachricht an die Serverausrüstung verbreitet;
- im Fall einer über ein Gateway unter Verwendung eines im Kommunikationsmodus in Klasse A bezüglich der Übertragung der anderen Nachricht durch das Relais definierten Empfangsfensters gelieferten (706) Antwortnachricht der Serverausrüstung, Ausführen (707) einer Entkapselung einer in der Antwortnachricht enthaltenen anderen Antwortnachricht und Verbreiten (712) der anderen Antwortnachricht an das Endgerät in einem im Kommunikationsmodus in Klasse A' bezüglich der Übertragung der Ursprungsnachricht durch das Endgerät definierten anderen Empfangsfenster.

9. Verfahren, implementiert von einem Endgerät (110), im Rahmen einer Übertragung in einem Kommunikationssystem, das eine Serverausrüstung (130) und mindestens ein mit der Serverausrüstung verbundenes Gateway (120, 121, 122) enthält, wobei das Endgerät konfiguriert ist, mit mindestens einem Gateway über ein Kommunikationsnetz des Typs LPWAN unter Verwendung eines Kommunikationsmodus genannt in Klasse A zu kommunizieren, der folgendermaßen definiert wird:
- das Endgerät, das direkt über ein Gateway kommunizieren möchte, überträgt eine Ursprungsnachricht an die Serverausrüstung;
- das Endgerät hört eine mögliche Antwortnachricht der Serverausrüstung ab, die über ein Gateway während mindestens eines bezüglich einer Übertragungszeit der Ursprungsnachricht durch das Endgerät definierten Empfangsfensters (Rx1, Rx2) verbreitet wird;
**dadurch gekennzeichnet, dass**, da das Kommunikationssystem außerdem mindestens ein Relais (100) enthält, das Endgerät konfiguriert ist, mit jedem Relais gemäß einem anderen Kommunikationsmodus genannt in Klasse A' zu kommunizieren, der folgendermaßen definiert ist:
- das Endgerät empfängt von einem Relais gesendete Tags (B), wobei jedes Tag für mindestens einen bezüglich des Tags vordefinierten Zeitschlitz (SLO, SLx) repräsentative Informationen enthält;
- das Endgerät, das über das Relais mit der Serverausrüstung kommunizieren möchte, überträgt eine Ursprungsnachricht an die Serverausrüstung nur während eines Zeitschlitzes;
- das Endgerät hört (615) eine mögliche Antwortnachricht der Serverausrüstung ab, die über das Relais während mindestens eines bezüglich einer Übertragungszeit der Ursprungsnachricht durch das Endgerät definierten anderen Empfangsfensters (Rx'1, Rx'2) verbreitet wird, wobei jedes andere Empfangsfenster (Rx'1, Rx'2) später um eine bezüglich jedes im Kommunikationsmodus in Klasse A definierten Empfangsfensters (Rx1, Rx2) vordefinierte Zeit verschoben wird.

10. Verfahren, implementiert von einer Serverausrüstung (130), im Rahmen einer Übertragung in einem Kommunikationssystem, das die Serverausrüstung und mindestens ein mit der Serverausrüstung verbundenes Gateway (120, 121, 122) enthält, wobei jedes Gateway konfiguriert ist, mit mindestens einem Endgerät (110, 111, 112, 113) über ein Kommunikationsnetz des Typs LPWAN zu kommunizieren,
**dadurch gekennzeichnet, dass**, da das Kommunikationssystem außerdem mindestens ein Relais (100) enthält, bei Empfang (1001) einer von einem oder mehreren Gateways verbreiteten Nachricht, wenn die empfangene Nachricht eine von einem Relais weitergeleitete Nachricht enthält, die Serverausrüstung die folgenden Schritte ausführt:
- Ausführen (1001) einer Entkapselung der weitergeleiteten Nachricht;
- Verarbeiten (1005) der weitergeleiteten Nachricht, um eine Antwortnachricht zu erhalten, die an das Endgerät zu schicken ist, das die Nachricht gesendet hat, die weitergeleitet wurde;
- Ausführen (1005) einer Kapselung der Antwortnachricht in einer an das Relais zu übermittelnden anderen Antwortnachricht; und
- Übertragen (1006) der anderen Antwortnachricht an ein Gateway, damit das Gateway die andere Antwortnachricht an das Relais verbreitet.

11. Computerprogramm, das eine Einheit von Anweisungen aufweist, die eine Ausführung, durch einen Prozessor (210), des Verfahrens nach Anspruch 8 oder nach Anspruch 9 oder nach Anspruch 10 verursacht, wenn das Computerprogramm von dem Prozessor ausgeführt wird.

12. Informationsspeicherträger, der ein Computerprogramm speichert, das eine Einheit von Anweisungen aufweist, die eine Ausführung, durch einen Prozessor (210), des Verfahrens nach Anspruch 8 oder nach Anspruch 9 oder nach Anspruch 10 verursacht, wenn das Computerprogramm von dem Prozessor ausgeführt wird.

13. Kommunikationssystem, das eine Serverausrüstung (130) und mindestens ein mit der Serverausrüstung verbundenes Gateway (120, 121, 122) enthält, wobei jedes Gateway konfiguriert ist, mit mindestens einem Endgerät (110, 111, 112, 113) über ein Kommunikationsnetz des Typs LPWAN unter Verwendung eines Kommunikationsmodus genannt in Klasse A zu kommunizieren, der folgendermaßen definiert ist:
- das Gateway ist konfiguriert, eine Ursprungsnachricht von einem Endgerät zu empfangen, und verteilt die empfangene Ursprungsnachricht an die Serverausrüstung;
- bei Empfang einer Antwortnachricht von der Serverausrüstung ist das Gateway konfiguriert, die Antwortnachricht unter Verwendung mindestens eines bezüglich einer Übertragungszeit der Ursprungsnachricht durch das Endgerät definierten Empfangsfensters (Rx1, Rx2) an das Endgerät zu verbreiten;
**dadurch gekennzeichnet, dass** das Kommunikationssystem außerdem mindestens ein Relais (100) enthält, das von jedem Gateway als ein Endgerät gesehen wird, wobei jedes Relais konfiguriert ist, den Kommunikationsmodus in Klasse A zu verwenden, um mit einem oder mehreren Gateways zu kommunizieren, und einen anderen Kommunikationsmodus, genannt in Klasse A' zu verwenden, um mit einem oder mehreren Endgeräten zu kommunizieren, der folgendermaßen definiert wird:
- das Relais ist konfiguriert, in regelmäßigen Abständen Tags (B) zu übertragen, wobei jedes Tag für mindestens einen bezüglich des Tags vordefinierten Zeitschlitz (SLO, SLx) repräsentative Informationen enthält;
- das Relais ist konfiguriert, um mögliche von einem oder mehreren Endgeräten an die Serverausrüstung gesendete Ursprungsnachrichten nur während jedes Zeitschlitzes abzuhören (701);
- im Fall einer über ein Gateway im Kommunikationsmodus in Klasse A gelieferten Antwortnachricht der Serverausrüstung ist das Relais konfiguriert, die Antwortnachricht unter Verwendung mindestens eines bezüglich einer Übertragungszeit der Ursprungsnachricht durch das Endgerät vordefinierten anderen Empfangsfensters (Rx'1, Rx'2) an das Endgerät zu verbreiten (712), wobei jedes andere Empfangsfenster (Rx'1, Rx'2) später um eine bezüglich jedes im Kommunikationsmodus in Klasse A definierten Empfangsfensters (Rx1, Rx2) vordefinierte Zeit (Δ5) verschoben wird;
und dass bei Empfang (701, 702) einer von einem Endgerät im Kommunikationsmodus in Klasse A' gesendeten Ursprungsnachricht durch ein Relais das Relais implementiert:
- Einrichtungen zur Ausführung (705) einer Kapselung der Ursprungsnachricht in einer anderen Nachricht an die Serverausrüstung;
- Einrichtungen zur Übertragung (705) der anderen Nachricht im Kommunikationsmodus in Klasse A, damit mindestens ein Gateway die andere Nachricht an die Serverausrüstung verbreitet;
- im Fall einer Antwortnachricht (706) von der Serverausrüstung, die über ein Gateway unter Verwendung eines im Kommunikationsmodus in Klasse A bezüglich der Übertragung der anderen Nachricht durch das Relais definierten Empfangsfensters geliefert wird, Einrichtungen zur Ausführung (707) einer Entkapselung einer in der Antwortnachricht enthaltenen anderen Antwortnachricht und Einrichtungen zur Verbreitung (712) der anderen Antwortnachricht an das Endgerät in einem im Kommunikationsmodus in Klasse A' bezüglich der Übertragung der Ursprungsnachricht durch das Endgerät definierten anderen Empfangsfenster;
und dass bei Empfang (1001) einer von einem oder mehreren Gateways verbreiteten Nachricht, wenn die empfangene Nachricht eine von einem Relais weitergeleitete Nachricht enthält, die Serverausrüstung implementiert:
- Einrichtungen zur Ausführung (1001) einer Entkapselung der weitergeleiteten Nachricht;
- Einrichtungen zur Verarbeitung (1005) der weitergeleiteten Nachricht, um eine Antwortnachricht zu erhalten, die an das Endgerät zu übermitteln ist, das die Nachricht gesendet hat, die weitergeleitet wurde;
- Einrichtungen zur Ausführung (1006) einer Kapselung der Antwortnachricht in einer anderen Antwortnachricht, die an das Relais zu übermitteln ist; und
- Einrichtungen zur Übertragung (1006) der anderen Antwortnachricht an ein Gateway, damit das Gateway die andere Antwortnachricht in einem im Kommunikationsmodus in Klasse A bezüglich der Übertragung der verbreiteten Nachricht durch das Endgerät definierten Empfangsfenster an das Relais verbreitet.

14. Relais (100), das dazu bestimmt ist, in einem Kommunikationssystem verwendet zu werden, das eine Serverausrüstung (130) und mindestens ein mit der Serverausrüstung verbundenes Gateway (120, 121, 122) enthält, wobei jedes Gateway konfiguriert ist, mit mindestens einem Endgerät (110, 111, 112, 113) über ein Kommunikationsnetz des Typs LPWAN unter Verwendung eines Kommunikationsmodus genannt in Klasse A zu kommunizieren, der wie folgt definiert ist:
- das Endgerät, das mit der Serverausrüstung direkt über ein Gateway kommunizieren möchte, ist konfiguriert, eine Ursprungsnachricht an die Serverausrüstung zu übertragen;
- das Endgerät ist konfiguriert, eine mögliche Antwortnachricht der Serverausrüstung abzuhören, die über ein Gateway während mindestens eines bezüglich einer Übertragungszeit der Ursprungsnachricht durch das Endgerät definierten Empfangsfensters (Rx1, Rx2) verbreitet wird;
**dadurch gekennzeichnet, dass**, da das Relais von jedem Gateway wie ein Endgerät gesehen wird, das Relais konfiguriert ist, den Kommunikationsmodus in Klasse A zu verwenden, um mit einem oder mehreren Gateways zu kommunizieren, und einen anderen Kommunikationsmodus genannt in Klasse A' zu verwenden, um mit einem oder mehreren Endgeräten zu kommunizieren, der wie folgt definiert ist:
- das Relais ist konfiguriert, in regelmäßigen Abständen Tags (B) zu übertragen, wobei jedes Tag Informationen enthält, die für mindestens einen vordefinierten Zeitschlitz bezüglich des Tags repräsentativ sind;
- das Relais ist konfiguriert, mögliche Ursprungsnachrichten abzuhören (701), die von einem oder mehreren Endgeräten an die Serverausrüstung nur während jedes Zeitschlitzes gesendet werden;
- im Fall einer Antwortnachricht (706) der Serverausrüstung, die über ein Gateway im Kommunikationsmodus in Klasse A geliefert wird, ist das Relais konfiguriert, die Antwortnachricht unter Verwendung mindestens eines bezüglich einer Übertragungszeit der Ursprungsnachricht durch das Endgerät definierten anderen Empfangsfensters (Rx'1, Rx'2) an das Endgerät zu verbreiten (712), wobei jedes andere Empfangsfenster (Rx'1, Rx'2) später um eine bezüglich jedes im Kommunikationsmodus in Klasse A definierten Empfangsfensters (Rx1, Rx2) vordefinierte Zeit (Δ5) verschoben wird;
und dass bei Empfang (701) einer von einem Endgerät im Kommunikationsmodus in Klasse A' gesendeten Ursprungsnachricht durch das Relais das Relais implementiert:
- Einrichtungen zur Ausführung (705) einer Kapselung der Ursprungsnachricht in einer anderen Nachricht an die Serverausrüstung;
- Einrichtungen zur Übertragung (705) der anderen Nachricht im Kommunikationsmodus in Klasse A, so dass mindestens ein Gateway die andere Nachricht an die Serverausrüstung verbreitet;
- im Fall einer über ein Gateway unter Verwendung eines im Kommunikationsmodus in Klasse A bezüglich der Übertragung der anderen Nachricht durch das Relais definierten Empfangsfensters gelieferten Antwortnachricht (706) der Serverausrüstung, Einrichtungen zur Ausführung (707) einer Entkapselung einer in der Antwortnachricht enthaltenen anderen Antwortnachricht und Einrichtungen zur Verbreitung (712) der anderen Antwortnachricht an das Endgerät in einem im Kommunikationsmodus in Klasse A' bezüglich der Übertragung der Ursprungsnachricht durch das Endgerät definierten anderen Empfangsfenster (Rx'1, Rx'2).

15. Endgerät (110), das dazu bestimmt ist, mit einem Kommunikationssystem verwendet zu werden, das eine Serverausrüstung (130) und mindestens ein mit der Serverausrüstung verbundenes Gateway (120, 121, 122) enthält, wobei das Endgerät konfiguriert ist, mit mindestens einem Gateway über ein Kommunikationsnetz des Typs LPWAN unter Verwendung eines Kommunikationsmodus genannt in Klasse A zu kommunizieren, der wie folgt definiert ist:
- das Endgerät, das direkt über ein Gateway mit der Serverausrüstung zu kommunizieren wünscht, ist konfiguriert, eine Ursprungsnachricht an die Serverausrüstung zu übertragen;
- das Endgerät ist konfiguriert, eine mögliche Antwortnachricht der Serverausrüstung abzuhören, die über ein Gateway während mindestens eines bezüglich einer Übertragungszeit der Ursprungsnachricht durch das Endgerät definierten Empfangsfensters (Rx1, Rx2) verbreitet wird;
**dadurch gekennzeichnet, dass**, da das Kommunikationssystem außerdem mindestens ein Relais (100) enthält, das Endgerät konfiguriert ist, mit jedem Relais gemäß einem anderen Kommunikationsmodus genannt in Klasse A' zu kommunizieren, der wie folgt definiert ist:
- das Endgerät ist konfiguriert, von einem Relais gesendete Tags (B) zu empfangen, wobei jedes Tag Informationen enthält, die für mindestens einen bezüglich des Tags vordefinierten Zeitschlitz (SLO, SLx) repräsentativ sind;
- das Endgerät, das mit der Serverausrüstung über das Relais zu kommunizieren wünscht, ist konfiguriert, eine Ursprungsnachricht an die Serverausrüstung nur während eines Zeitschlitzes zu übertragen;
- das Endgerät ist konfiguriert, eine mögliche Antwortnachricht der Serverausrüstung abzuhören (615), die während mindestens eines bezüglich einer Übertragungszeit der Ursprungsnachricht durch das Endgerät definierten anderen Empfangsfensters (Rx'1, Rx'2) über das Relais verbreitet wird, wobei jedes andere Empfangsfenster (Rx'1, Rx'2) später um eine bezüglich jedes im Kommunikationsmodus in Klasse A definierten Empfangsfensters (Rx1, Rx2) vordefinierte Zeit (Δ5) verschoben wird.

16. Serverausrüstung (130), die dazu bestimmt ist, in einem Kommunikationssystem verwendet zu werden, das die Serverausrüstung und mindestens ein mit der Serverausrüstung verbundenes Gateway (120, 121, 122) enthält, wobei jedes Gateway konfiguriert ist, mit mindestens einem Endgerät (110, 111, 112, 113) über ein Kommunikationsnetz des Typs LPWAN zu kommunizieren,
**dadurch gekennzeichnet, dass**, da das Kommunikationssystem außerdem mindestens ein Relais (100) enthält, bei Empfang (1001) einer von einem oder mehreren Gateways verbreiteten Nachricht, wenn die empfangene Nachricht eine von einem Relais weitergeleitete Nachricht enthält, die Serverausrüstung implementiert:
- Einrichtungen zur Ausführung (1001) einer Entkapselung der weitergeleiteten Nachricht;
- Einrichtungen zur Verarbeitung (1005) der weitergeleiteten Nachricht, um eine Antwortnachricht zu erhalten, die an das Endgerät zu übermitteln ist, das die Nachricht gesendet hat, die weitergeleitet wurde;
- Einrichtungen zur Durchführung (1006) einer Kapselung der Antwortnachricht in einer anderen an das Relais zu übermittelnden Antwortnachricht; und
- Einrichtungen zur Übertragung (1006) der anderen Antwortnachricht an ein Gateway, damit das Gateway die andere Antwortnachricht an das Relais verbreitet.

## Claims

1. Method for transmission in a communication system including server equipment (130) and at least one gateway (120, 121, 122) connected to the server equipment, each gateway being configured to communicate with at least one terminal (110, 111, 112, 113) via an LPWAN communication network using a so-called Class A communication mode defined as follows:
- said gateway receives an original message coming from one said terminal and propagates said received original message toward the server equipment;
- on reception of a response message from the server equipment, said gateway propagates the response message toward said terminal using at least one reception window (Rx1, Rx2) defined with respect to a transmission time of said original message by said terminal;
**characterised in that** the communication system further includes at least one relay (100) seen as a terminal by each gateway, each relay using the Class A communication mode for communicating with one or more of said gateways, and using, to communicate with one or more terminals, another communication mode, referred to as Class A', defined as follows:
- the relay transmits beacons (B) at regular intervals, each beacon including information representing at least one timeslot (SL0, SLx) predefined with respect to said beacon;
- the relay listens out (701) for any original messages sent by one or more terminals, toward the server equipment, only during each said timeslot;
- in the case of a response message from the server equipment provided via one said gateway in Class A communication mode, said relay propagates (712) the response message toward said terminal using at least one other reception window (Rx'1, Rx'2) defined with respect to a transmission time of said original message by said terminal, each said other reception window (Rx'1, Rx'2) being offset subsequently by a predefined time (Δ5) with respect to each reception window (Rx1, Rx2) defined in Class A communication mode;
and **in that**, on reception (701, 702) by one said relay of an original message sent by one said terminal in Class A' communication mode, said relay performs:
- performing (705) an encapsulation of the original message in another message intended for the server equipment;
- transmitting (705) said other message in Class A communication mode so that at least one said gateway propagates said other message toward the server equipment;
- in the case of a response message from the server equipment provided via one said gateway using (706) a reception window defined in Class A communication mode with respect to the transmission of said other message by said relay, performing (707) a de-encapsulation of another response message contained in said response message and propagating (712) said other response message toward said terminal in one said other reception window defined in Class A' communication mode with respect to the transmission of said original message by said terminal;
and **in that**, on reception (1001) of a message propagated by one or more gateways, when the received message includes a message relayed by one said relay, the server equipment performs:
- performing (1001) a de-encapsulation of the relayed message;
- processing (1005) the relayed message for obtaining a response message to be addressed to the terminal that sent the message that was relayed;
- performing (1006) an encapsulation of the response message in another response message to be addressed to the relay; and
- transmitting (1006) said other response message to a gateway so that said gateway propagates said other response message toward said relay in one said reception window defined in Class A communication mode with respect to the transmission by said terminal of said propagated message.

2. Method according to claim 1, **characterised in that** each relay is initialised as follows:
- said relay transmits (402) a registration message to the server equipment;
- in the case of a response message (403, 404) from the server equipment provided via one said gateway, the relay transmits (407) a beacon parameter recovery message to the server equipment;
- in the case of a response message (408, 409) from the server equipment provided via one said gateway, the relay schedules (411) the sending of said beacons and schedules (411) listening out during each said timeslot, said response message including information representing each said timeslot.

3. Method according to any one of claim 1 and 2, **characterised in that**, on reception (701, 702) by one said relay of an original message sent by one said terminal in Class A' communication mode, the relay performs:
- when the original message is a registration message from the said terminal to the server equipment, said relay propagates said original message toward the server equipment and, on reception of a response message coming from the server equipment, said relay considers that said terminal is attached to said relay;
- when the original message is another message, said relay propagates said original message toward the server equipment only if said terminal is attached to said relay.

4. Method according to claim 3, **characterised in that**, on reception of a message propagated by one or more gateways, when the received message includes a message relayed by one said relay, the server equipment determines (903, 1002) whether the relayed message has also been received directly via at least one said gateway and, if such is the case, the server equipment performs:
- processing (1005) the relayed message for obtaining a response message to be addressed to the terminal that sent the message that has been relayed;
- transmitting (1006) said response message to a gateway so that said gateway propagates said response message toward said terminal in one said reception window defined in Class A communication mode with respect to the transmission by said terminal of the message that was relayed;
- transmitting (1004) to the relay a detachment message indicating to said relay that said terminal is no longer attached to said relay;
and **in that** the terminal listens out in each said reception window defined in Class A communication mode and in each said reception window defined in Class A' communication mode and, when said terminal receives a response message in one said reception window defined in Class A communication mode, said terminal switches (614) into Class A communication mode.

5. Method according to any one of claims 1 to 4, **characterised in that** two reception windows (Rx1, Rx2) are defined in Class A communication mode and two reception windows (Rx'1, Rx'2) are defined in Class A' communication mode.

6. Method according to any one of claims 1 to 5, **characterised in that** each reception window in Class A' communication mode has a duration greater than each corresponding reception window in Class A communication mode.

7. Method according to any one of claims 1 to 6, **characterised in that** the server equipment (130) comprises at least one relay application (132), each relay application being responsible for performing the encapsulations and de-encapsulations vis-à-vis one or more of said relays.

8. Method implemented by a relay (100) in the context of a transmission in a communication system including server equipment (130) and at least one gateway (120, 121, 122) connected to the server equipment, each gateway being configured to communicate with at least one terminal (110, 111, 112, 113) via an LPWAN communication network using a so-called Class A communication mode defined as follows:
- said terminal wishing to communicate with the server equipment directly via one said gateway transmits an original message to the server equipment;
- said terminal listens out for any response message from the server equipment propagated via one said gateway during at least one reception window (Rx1, Rx2) defined with respect to a transmission time for said original message by said terminal;
**characterised in that** the communication system further includes said relay (100), which is seen as a terminal by each gateway, said relay using the Class A communication mode to communicate with one or more said gateways, and using, to communicate with one or more terminals, another communication mode, referred to as Class A', defined as follows:
- the relay transmits beacons (B) at regular intervals, each beacon including information representing at least one timeslot (SL0, SLx) predefined with respect to said beacon;
- the relay listens out (701) for any original messages sent by one or more terminals to the server equipment only during each said timeslot;
- in the case of a response message from the server equipment provided via one said gateway in Class A communication mode, said relay propagates (712) the response message toward said terminal using at least one other reception window (Rx'1, Rx'2) defined with respect to a transmission time for said original message by said terminal, each said other reception window (Rx'1, Rx'2) being offset subsequently by a predefined time (Δ5) with respect to each reception window (Rx1, Rx2) defined in Class A communication mode;
and **in that**, on reception (701, 702) by said relay of an original message sent by one said terminal in Class A' communication mode, said relay performs:
- performing (705) an encapsulation of the original message in another message intended for the server equipment;
- transmitting (705) said other message in Class A communication mode so that at least one said gateway propagates said other message toward the server equipment;
- in the case of a response message from the server equipment provided (706) via one said gateway using a reception window defined in Class A communication mode with respect to the transmission of said other message via said relay, performing (707) a de-encapsulation of another response message contained in said response message and propagating (712) said other response message toward said terminal in one said other reception window defined in Class A' communication mode with respect to the transmission of said original message by said terminal.

9. Method implemented by a terminal (110) in the context of a transmission in a communication system including server equipment (130) and at least one gateway (120, 121, 122) connected to the server equipment, said terminal being configured to communicate with at least one said gateway via an LPWAN communication network using a so-called Class A communication mode, defined as follows:
- said terminal wishing to communicate with the server equipment directly via one said gateway transmits an original message to the server equipment;
- said terminal listens out for any response message from the server equipment propagated via one said gateway during at least one reception window (Rx1, Rx2) defined with respect to a transmission time for said original message by said terminal;
**characterised in that**, the communication system further including at least one relay (100), said terminal is configured to communicate with each relay in accordance with another so-called Class A' communication mode, defined as follows:
- the terminal receives beacons (B) sent by one said relay, each beacon including information representing at least one timeslot (SL0, SLx) predefined with respect to said beacon;
- said terminal wishing to communicate with the server equipment via said relay transmits an original message to the server equipment only during one said timeslot;
- said terminal listens out (615) for any response message from the server equipment propagated via said relay during at least one other reception window (Rx'1, Rx'2) defined with respect to a transmission time for said original message by said terminal, each said other reception window (Rx'1, Rx'2) being offset subsequently by a predefined time with respect to each reception window (Rx1, Rx2) defined in Class A communication mode.

10. Method implemented by server equipment (130) in the context of a transmission in a communication system including said server equipment and at least one gateway (120, 121, 122) connected to the server equipment, each gateway being configured to communicate with at least one terminal (110, 111, 112, 113) via an LPWAN communication system,
**characterised in that**, the communication system further including at least one relay (100), on reception (1001) of a message propagated by one or more gateways, when the received message includes a message relayed by one said relay, the server equipment performs:
- performing (1001) a de-encapsulation of the relayed message;
- processing (1005) the relayed message for obtaining a response message to be addressed to the terminal that sent the message that was relayed;
- encapsulating (1005) the response message in another response message to be addressed to the relay; and
- transmitting (1006) said other response message to a gateway, so that said gateway propagates said other response message toward said relay.

11. Computer program comprising a set of instructions causing an execution, by a processor (210), of the method according to claim 8 or according to claim 9 or according to claim 10, when said computer program is executed by said processor.

12. Information storage medium storing a computer program comprising a set of instructions causing an execution, by a processor (210), of the method according to claim 8 or according to claim 9 or according to claim 10, when said computer program is executed by said processor.

13. Communication system including server equipment (130) and at least one gateway (120, 121, 122) connected to the server equipment, each gateway being configured to communicate with at least one terminal (110, 111, 112, 113) via an LPWAN communication network using a so-called Class A communication mode, defined as follows:
- said gateway is configured to receive an original message coming from one said terminal and propagates said received original message toward the server equipment;
- on reception of a response message from the server equipment, said gateway is configured to propagate the response message toward said terminal using at least one reception window (Rx1, Rx2) defined with respect to a transmission time of said original message by said terminal;
**characterised in that** the communication system further includes at least one relay (100) seen as a terminal by each gateway, each relay being configured to use the Class A communication mode to communicate with one or more of said gateways, and to use, to communicate with one or more terminals, another so-called Class A' communication mode, defined as follows:
- the relay is configured to transmit beacons (B) at regular intervals, each beacon including information representing at least one timeslot (SL0, SLx) predefined with respect to said beacon;
- the relay is configured so as to listen (701) out for any original messages sent by one or more terminals to the server equipment only during each said timeslot;
- in the case of a response message from the server equipment provided via one said gateway in Class A communication mode, said relay is configured to propagate (712) the response message toward said terminal using at least one other reception window (Rx'1, Rx'2) defined with respect to a transmission time of said original message by said terminal, each said other reception window (Rx'1, Rx'2) being offset subsequently by a predefined time (Δ5) with respect to each reception window (Rx1, Rx2) defined in Class A communication mode;
and **in that**, on reception (701, 702) by one said relay of an original message sent by one said terminal in Class A' communication mode, said relay implements:
- means for performing (705) an encapsulation of the original message in another message intended for the server equipment;
- means for transmitting (705) said other message in Class A communication mode, so that at least one said gateway propagates said other message toward the server equipment;
- in the case of a response message (706) from the server equipment provided via one said gateway using a reception window defined in Class A communication mode with respect to the transmission of said other message by said relay, means for performing (707) a de-encapsulation of another response message contained in said response message and means for propagating (712) said other response message toward said terminal in one said other reception window defined in Class A' communication mode with respect to the transmission of said original message by said terminal;
and **in that**, on reception (1001) of a message propagated by one or more gateways, when the received message includes a message relayed by one said relay, the server equipment implements:
- means for performing (1001) a de-encapsulation of the relayed message;
- means for processing (1005) the relayed message for obtaining a response message to be addressed to the terminal that sent the message that was relayed;
- means for performing (1006) an encapsulation of the response message in another response message to be addressed to the relay; and
- means for transmitting (1006) said other response message to a gateway so that said gateway propagates said other response message toward said relay in one said reception window defined in Class A communication mode with respect to the transmission by said terminal of said propagated message.

14. Relay (100) intended to be used in a communication system including server equipment (130) and at least one gateway (120, 121, 122) connected to the server equipment, each gateway being configured to communicate with at least one terminal (110, 111, 112, 113) via an LPWAN communication network using a so-called Class A communication mode, defined as follows:
- said terminal wishing to communicate with the server equipment directly via one said gateway is configured to transmit an original message to the server equipment;
- said terminal is configured so as to listen out for any response message from the server equipment propagated via one said gateway during at least one reception window (Rx1, Rx2) defined with respect to a transmission time of said original message by said terminal;
**characterised in that**, said relay being seen as a terminal by each gateway, said relay is configured to use the Class A communication mode to communicate with one or more of said gateways, and to use, for communicating with one or more terminals, another so-called Class A' communication mode, defined as follows:
- the relay is configured to transmit beacons (B) at regular intervals, each beacon including information representing at least one timeslot predefined with respect to said beacon;
- the relay is configured so as to listen out (701) for any original messages sent by one or more terminals to the server equipment only during each said timeslot;
- in the case of a response message (706) from the server equipment provided via one said gateway in Class A communication mode, said relay is configured to propagate (712) the response message toward said terminal using at least one other reception window (Rx'1, Rx'2) defined with respect to a transmission time of said original message by said terminal, each said other reception window (Rx'1, Rx'2) being offset subsequently by a time (Δ5) predefined with respect to each reception window (Rx1, Rx2) defined in Class A communication mode;
and **in that**, on reception (701) by said relay of an original message sent by one said terminal in Class A' communication mode, said relay implements:
- means for performing (705) an encapsulation of the original message in another message intended for the server equipment;
- means for transmitting (705) said other message in Class A communication mode so that at least one said gateway propagates said other message toward the server equipment;
- in the case of a response message (706) from the server equipment provided via one said gateway using a reception window defined in Class A communication mode with respect to the transmission of said other message by said relay, means for performing (707) a de-encapsulation of another response message contained in said response message and means for propagating (712) said other response message toward said terminal in one said other reception window (Rx'1, Rx'2) defined in Class A' communication mode with respect to the transmission of said original message by said terminal.

15. Terminal (110) intended to be used with a communication system including server equipment (130) and at least one gateway (120, 121, 122) connected to the server equipment, said terminal being configured to communicate with at least one said gateway via an LPWAN communication network using a so-called Class A communication mode, defined as follows:
- said terminal wishing to communicate with the server equipment directly via one said gateway is configured to transmit an original message to the server equipment;
- said terminal is configured to listen out for any response message from the server equipment propagated via one said gateway during at least one reception window (Rx1, Rx2) defined with respect to a transmission time of said original message by said terminal;
**characterised in that**, the communication system further including at least one relay (100), said terminal is configured to communicate with each relay in another so-called Class A' communication mode, defined as follows:
- the terminal is configured to receive beacons (B) sent by one said relay, each beacon including information representing at least one timeslot (SL0, SLx) predefined with respect to said beacon;
- said terminal wishing to communicate with the server equipment via said relay is configured to transmit an original message to the server equipment only during one said timeslot;
- said terminal is configured to listen out (615) for any response message from the server equipment propagated via said relay during at least one other reception window (Rx'1, Rx'2) defined with respect to a transmission time of said original message by said terminal, each said other reception window (Rx'1, Rx'2) being offset subsequently by a time (Δ5) predefined with respect to each reception window (Rx1, Rx2) defined in Class A communication mode.

16. Server equipment (130) intended to be used in a communication system including said server equipment and at least one gateway (120, 121, 122) connected to the server equipment, each gateway being configured to communicate with at least one terminal (110, 111, 112, 113) via an LPWAN communication network,
**characterised in that**, the communication system further including at least one relay (100), on reception (1001) of a message propagated by one or more gateways, when the received message includes a message relayed by one said relay, the server equipment implements:
- means for performing (1001) a de-encapsulation of the relayed message;
- means for processing (1005) the relayed message for obtaining a response message to be addressed to the terminal that sent the message that was relayed;
- means for performing (1006) an encapsulation of the response message in another response message to be addressed to the relay; and
- means for transmitting (1006) said other response message to a gateway so that said gateway propagates said other response message toward said relay.
